# EUROPEAN PATENT APPLICATION

(11) **EP 4 535 126 A1**
(43) Date of publication of application: **09.04.2025**
(21) Application number: 23811142.1
(22) Date of filing: 25.05.2023
(51) Int. Cl.: G06F 3/01

(54) **VIRTUAL CURSOR DETERMINATION METHOD AND APPARATUS IN VIRTUAL REALITY SCENE, DEVICE, AND MEDIUM**

(30) Priority: 25.05.2022 CN 202210583744; 25.05.2022 CN 202210583737; 25.05.2022 CN 202210583738; 25.05.2022 CN 202210581093; 25.05.2022 CN 202210581091
(71) Applicant: Beijing Zitiao Network Technology Co., Ltd., Beijing 100190 (CN)
(72) Inventor: RAO, Xiaolin, Beijing 100028 (CN); FANG, Chi, Beijing 100028 (CN); CHENG, Wenhao, Beijing 100028 (CN)
(74) Representative: Dentons UK and Middle East LLP
(86) International application number: PCT/CN2023/096355
(87) International publication number: WO 2023/227072

(57) **Abstract**

The disclosure relates to a method, apparatus, device, storage medium and program product for determining a virtual cursor in a virtual reality scene, and the method includes: determining position information of a virtual human body of a user in the virtual reality scene, wherein the position information comprises a wrist position and a waist position; determining a virtual ray based on the position information, wherein a starting point of the virtual ray is determined based on the wrist position, and a direction of the virtual ray is determined based on the waist position and the wrist position; and determining the virtual cursor based on an intersection of the virtual ray and a virtual object in the virtual reality scene. According to the embodiments of the present disclosure, the virtual ray is constructed through the position information of the human body, thereby determining the position of the virtual cursor according to the virtual ray, avoiding using the handle to operate, achieving bare-hand manipulation, and improving user experience.

## Description

This application claims priority to the following applications filed on May 25, 2022: the Chinese Patent Application No. 202210583744.5, entitled "METHOD, APPARATUS, DEVICE, AND MEDIUM FOR DETERMINING A VIRTUAL CURSOR IN A VIRTUAL REALITY SCENE"; the Chinese Patent Application No. 202210583737.5, entitled "METHOD, APPARATUS, DEVICE, STORAGE MEDIUM AND PROGRAM PRODUCT FOR INTERACTION"; the Chinese Patent Application No. 202210583738. X, entitled "METHOD, APPARATUS, DEVICE, STORAGE MEDIUM AND PROGRAM PRODUCT FOR INTERACTION"; the Chinese Patent Application No. 202210581093.6, entitled "METHOD, APPARATUS, DEVICE, STORAGE MEDIUM AND PROGRAM PRODUCT FOR INTERACTION"; and the Chinese Patent Application No. 202210581091.7, entitled "METHOD, APPARATUS, DEVICE, STORAGE MEDIUM, AND PROGRAM PRODUCT FOR GESTURE CONTROL".

### FIELD

The present disclosure relates to the technical field of virtual reality, in particular to a method, apparatus, device, storage medium and program product for interaction, and a method, apparatus, device, storage medium and program product for gesture control.

### BACKGROUND

A basic implementation of virtual reality (VR) technology is to simulate a virtual environment to provide a person with a sense of environmental immersion. With the continuous development of social productivity and science and technology, the demands of various industries on VR technology are increasing.

At present, VR hardware devices on the market are mainly VR helmet devices which allow people to immerse themselves in a virtual world after wearing them. At present, the interaction mode with the VR helmet device is mainly through interaction with a handheld handle and the handle is connected with the helmet in a Bluetooth mode. Information such as the position and the key of the handle is transmitted to the helmet, and the helmet makes corresponding interaction. At present, the defect of the handheld handle is that the interaction mode is relatively dependent on the handle. When the handle runs out of power, this convenient and reliable interaction device is lost. Currently, many handles are heavy and thick, and holding them for a long time will be a burden. VR values immersion, and holding the handheld handle for interactive operation is not conducive to the user's immersive experience.

Due to advances in technology and diversified development of market demands, virtual reality systems and / or augmented reality systems are becoming more and more popular, and are applied in many fields, such as computer games, health, security, industrial, educational training and the like. With the development of artificial reality, user interaction with content is essential in VR, AR, and MR scenarios.

In current augmented reality and virtual reality devices, interaction in a virtual environment is controlled by a physical device such as an external controller. When biological hands are used to replace the controller, under virtual environments such as VR, AR and MR scenarios, how to solve the interaction between biological hands and virtual objects is an urgent problem that needs to be solved.

### SUMMARY

To solve the foregoing technical problem, embodiments of the present disclosure provides a method, apparatus, device, storage medium, and program product for interaction, to implement bare- hand manipulation, and improve user experience.

In a first aspect, embodiments of the present disclosure provide a method for determining a virtual cursor in a virtual reality scene, including:
determining position information of a virtual human body of a user in the virtual reality scene, wherein the position information comprises a wrist position and a waist position;
determining a virtual ray based on the position information, wherein a starting point of the virtual ray is determined based on the wrist position, and a direction of the virtual ray is determined based on the waist position and the wrist position; and
determining the virtual cursor based on an intersection of the virtual ray and a virtual object in the virtual reality scene.

In a second aspect, embodiments of the present disclosure provide an apparatus for determining a virtual cursor in a virtual reality scene, including:
a position information determining module configured to determine position information of a virtual human body of a user in the virtual reality scene, wherein the position information comprises a wrist position and a waist position;
a virtual ray determining module configured to determine a virtual ray based on the position information, wherein a starting point of the virtual ray is determined based on the wrist position, and a direction of the virtual ray is determined based on the waist position and the wrist position; and
a virtual cursor determining module configured to determine the virtual cursor based on an intersection of the virtual ray and a virtual object in the virtual reality scene.

In a third aspect, embodiments of the present disclosure provide an electronic device, including:
one or more processors;
a storage device configured to store one or more programs; and
the one or more programs, when executed by the one or more processors, causing the one or more processors to implement the method of determining a virtual cursor in a virtual reality scene according to any of the first aspect.

In a fourth aspect, embodiments of the present disclosure provide a computer-readable storage medium having stored thereon a computer program, wherein the program, when executed by a processor, implements the method of determining a virtual cursor in a virtual reality scene according to any of the first aspect.

In a fifth aspect, embodiments of the present disclosure provide a computer program product, wherein the computer program product includes computer programs or instructions, and when the computer programs or the instructions are executed by a processor, implement the method of determining a virtual cursor in a virtual reality scene according to any of the first aspect.

Embodiments of the present disclosure provide a method, apparatus, device, storage medium and program product for determining a virtual cursor in a virtual reality scene, and the method includes: determining position information of a virtual human body of a user in the virtual reality scene, wherein the position information comprises a wrist position and a waist position; determining a virtual ray based on the position information, wherein a starting point of the virtual ray is determined based on the wrist position, and a direction of the virtual ray is determined based on the waist position and the wrist position; and determining the virtual cursor based on an intersection of the virtual ray and a virtual object in the virtual reality scene. According to the embodiments of the present disclosure, the virtual ray is constructed through the position information of the human body, thereby determining the position of the virtual cursor according to the virtual ray, avoiding using the handle to operate, achieving bare-hand manipulation, and improving user experience.

In order to solve the foregoing technical problem, embodiments of the present disclosure provide a method, apparatus, device, storage medium and program product for interaction. A target object is selected through an index finger, an interaction with the target object is performed according to actions of other fingers, and the problem of interaction between biological hands and virtual objects is solved.

In a first aspect, embodiments of the present disclosure provide a method for interaction, including:
determining a target object based on a fingertip direction of a virtual index finger of a virtual hand of a user in a virtual reality scene;
determining that whether a virtual thumb and a virtual middle finger of the virtual hand are in a pinching state, wherein the pinching state is that the virtual thumb is in contact with the virtual middle finger; and
in response to the virtual thumb and the virtual middle finger being in a pinching state, determining that the target object is in a selected state.

In a second aspect, embodiments of the present disclosure provide an apparatus for interaction, including:
a target object determining module configured to determine a target object based on a fingertip direction of a virtual index finger of a virtual hand of a user in a virtual reality scene;
a pinching state determining module configured to determine whether a virtual thumb and a virtual middle finger of the virtual hand are in a pinching state, wherein the pinching state is that the virtual thumb is in contact with the virtual middle finger; and
a selected state determining module configured to, in response to the virtual thumb and the virtual middle finger being in a pinching state, determine that the target object is in a selected state.

In a third aspect, embodiments of the present disclosure provide an electronic device, including:
one or more processors;
a storage device configured to store one or more programs; and
the one or more programs, when executed by the one or more processors, causing the one or more processors to implement the method for interaction according to any one of the first aspect.

In a fourth aspect, embodiments of the present disclosure provide a computer-readable storage medium having stored thereon a computer program, and the computer program, when executed by a processor, implements the method for interaction according to any one of the first aspect.

In a fifth aspect, embodiments of the present disclosure provide a computer program product, where the computer program product includes computer programs or instructions which, when executed by a processor, implements the method for interaction according to any one of the first aspect.

Embodiments of the present disclosure provide a method, apparatus, device, a storage medium and a program product for interaction, and the method includes: determining a target object based on a fingertip direction of a virtual index finger of a virtual hand of a user in a virtual reality scene; determining whether a virtual thumb and a virtual middle finger of the virtual hand are in a pinching state, wherein the pinching state is that the virtual thumb is in contact with the virtual middle finger; and in response to the virtual thumb and the virtual middle finger being in a pinching state, determining that the target object is in a selected state. According to the embodiment of the present disclosure, the target object is selected through the index finger, the interaction with the target object is completed according to actions of other fingers, the problem of interaction between biological hands and virtual objects is solved. Further, the target object is selected through the index finger, which improves the selection precision of the target object.

In order to solve the foregoing technical problem, embodiments of the present disclosure provide a method, apparatus, device, storage medium and a program product for interaction. The problem of interaction between biological hands and virtual objects is solved by interacting with virtual devices based on the actions of virtual fingers when the user's palm is facing upwards.

In a first aspect, embodiments of the present disclosure provide a method for interaction, including:
when it is determined that a palm of a virtual hand of a user in a virtual reality scene being facing upward, obtaining an action state of a virtual hand; and
when it is determined that the action state of the virtual hand is changed from a pinching state to a releasing state, performing a predetermined operation, wherein the pinching state is a state where the five fingers of the virtual hand are together and fingertips are in contact, and the releasing state is a state where the five fingers of the virtual hand are stretched and separated.

In a second aspect, embodiments of the present disclosure provide an apparatus for interaction, including:
an action state obtaining module configured to, when it is determined that a palm of a virtual hand of a user in a virtual reality scene being facing upward, obtain an action state of a virtual hand;
an operation performing module configured to, when it is determined that the action state of the virtual hand is changed from a pinching state to a releasing state, perform a predetermined operation, wherein the pinching state is a state where the five fingers of the virtual hand are together and fingertips are in contact, and the releasing state is a state where the five fingers of the virtual hand are stretched and separated.

In a third aspect, embodiments of the present disclosure provide an electronic device, including:
one or more processors;
a storage device configured to store one or more programs; and
the one or more programs, when executed by the one or more processors, causing the one or more processors to implement the method for interaction according to any one of the first aspect.

In a fourth aspect, embodiments of the present disclosure provide a computer-readable storage medium having stored thereon a computer program, and the computer program, when executed by a processor, implements the method for interaction according to any one of the first aspect.

In a fifth aspect, embodiments of the present disclosure provide a computer program product, where the computer program product includes computer programs or instructions which, when executed by a processor, implements the method for interaction according to any one of the first aspect.

Embodiments of the present disclosure provide a method, apparatus, device, a storage medium and a program product for interaction, and the method includes: when it is determined that a palm of a virtual hand of a user in a virtual reality scene being facing upward, obtaining an action state of a virtual hand; when it is determined that the action state of the virtual hand is changed from a pinching state to a releasing state, performing a predetermined operation, wherein the pinching state is a state where the five fingers of the virtual hand are together and fingertips are in contact, and the releasing state is a state where the five fingers of the virtual hand are stretched and separated. According to embodiments of the present disclosure, the problem of interaction between biological hands and virtual objects is solved by interacting with virtual devices based on the actions of virtual fingers when the user's palm is facing upwards.

In order to solve the foregoing technical problem, embodiments of the present disclosure further provides a method, apparatus, device, storage medium and a program product for interaction. When a palm is in a state where five fingers are closed together and straight, and within a specified range, a human-computer interaction operation is triggered, which solves the problem of interaction between biological hands and virtual objects.

In a first aspect, embodiments of the present disclosure provide a method for interaction, including:
detecting whether a palm is in a state where five fingers are closed together and straight;
in response to the palm being in the state where five fingers are closed together and straight, determining whether the palm is within a predetermined range; and
in response to the palm being within the predetermined range, triggering a human-computer interaction operation.

In a second aspect, embodiments of the present disclosure provide an apparatus for interaction, including:
a five-finger state detecting module configured to detect whether a palm is in a state where five fingers are closed together and straight;
a palm range determining module configured to, in response to the palm being in a state where five fingers are closed together and straight, determine whether the palm is within a predetermined range; and
an interaction triggering module configured to, in response to the palm being within the predetermined range, trigger a human-computer interaction operation.

In a third aspect, embodiments of the present disclosure provide an electronic device, including:
one or more processors;
a storage device configured to store one or more programs; and
the one or more programs, when executed by the one or more processors, causing the one or more processors to implement the method for interaction according to any one of the first aspect.

In a fourth aspect, embodiments of the present disclosure provide a computer-readable storage medium having stored thereon a computer program, and the computer program, when executed by a processor, implements the method for interaction according to any one of the first aspect.

In a fifth aspect, embodiments of the present disclosure provide a computer program product, where the computer program product includes computer programs or instructions which, when executed by a processor, implements the method for interaction according to any one of the first aspect.

Embodiments of the present disclosure provide a method, an apparatus, a device, a storage medium and a program product for interaction, and the method includes: detecting whether a palm is in a state where five fingers are closed together and straight; in response to the palm being in a state where five fingers are closed together and straight, determining whether the palm is within a predetermined range; and in response to the palm being within the predetermined range, triggering a human-computer interaction operation. According to the embodiment of the present disclosure, when the palm is in the state where five fingers are closed together and straight, and the palm is within the specified range, the human-computer interaction operation is triggered, which solves the problem of interaction between biological hands and virtual objects.

In order to solve the foregoing technical problem, embodiments of the present disclosure further provides a method, apparatus, device, storage medium and program product for gesture control. When the palm is in a state with four fingers clenched and the thumb straight, and is near the mouth, the human- computer interaction operation is triggered, and the problem of interaction between biological hands and virtual objects is solved.

In a first aspect, embodiments of the present disclosure provide a method for gesture control, including:
obtaining a first hand image;
identifying a hand posture of the first hand image;
in response to the hand posture being a first posture, determining position information of a thumb according to the first hand image, wherein the first posture is a posture with four fingers clenched and the thumb straight; and
determining that the position of the thumb meets a predetermined condition and performing a first operation.

In a second aspect, embodiments of the present disclosure provide an apparatus for gesture control, including:
a first hand image obtaining module configured to obtain a first hand image;
a hand posture identifying module configured to identify a hand posture of the first hand image;
a position information determining module configured to, in response to the hand posture being a first posture, determine position information of a thumb according to the first hand image, wherein the first posture is a posture with four fingers clenched and the thumb straight; and
a first operation performing module configured to determine that the position of the thumb meets a predetermined condition and perform a first operation.

In a third aspect, embodiments of the present disclosure provide an electronic device, including:
one or more processors;
a storage device configured to store one or more programs; and
the one or more programs, when executed by the one or more processors, causing the one or more processors to implement the method for gesture control according to any one of the first aspect.

In a fourth aspect, embodiments of the present disclosure provide a computer-readable storage medium having stored thereon a computer program, and the computer program, when executed by a processor, implements the method for gesture control according to any one of the first aspect.

In a fifth aspect, embodiments of the present disclosure provide a computer program product, where the computer program product includes computer programs or instructions which, when executed by a processor, implements the method for gesture control according to any one of the first aspect.

The embodiment of the present disclosure provides a method, apparatus, device, storage medium and program product for gesture control, and the method includes: obtaining a first hand image; identifying a hand posture of the first hand image; in response to the hand posture being a first posture, determining position information of a thumb according to the first hand image, wherein the first posture is a posture with four fingers clenched and the thumb straight; and determining that the position of the thumb meets a predetermined condition and performing a first operation. In embodiments of the present disclosure, when the palm is in a state with four fingers clenched and the thumb straight, and is near the mouth, the human- computer interaction operation is triggered, and the problem of interaction between biological hands and virtual objects is solved.

### BRIEF DESCRIPTION OF DRAWINGS

The above and other features, advantages, and aspects of various embodiments of the present disclosure will become more apparent from the following detailed description taken in conjunction with the accompanying drawings. Throughout the drawings, the same or similar reference numerals refer to the same or similar elements. It should be understood that the drawings are schematic, and components and elements are not necessarily drawn to scale.
FIG. 1A is a flowchart of a method of determining a virtual cursor in a virtual reality scene according to embodiments of the present disclosure;
FIG. 1B is a schematic diagram of determining a virtual ray according to embodiments of the present disclosure;
FIG. 1C is a flowchart of another method of determining a virtual cursor in a virtual reality scene according to embodiments of the present disclosure;
FIG. 1D is a schematic structural diagram of an apparatus for determining a virtual ray according to embodiments of the present disclosure;
FIG. 2A is a flowchart of a method for interaction according to embodiments of the present disclosure;
FIG. 2B is a schematic diagram of a virtual index finger emitting a virtual ray according to embodiments of the present disclosure;
FIG. 2C is a schematic diagram of a gesture of drag operation according to embodiments of the present disclosure;
FIG. 2D is a schematic diagram of a gesture of swiping to flip according to embodiments of the present disclosure;
FIG. 2E is a schematic structural diagram of an apparatus for interaction according to embodiments of the present disclosure;
FIG. 3A is a flowchart of a method for interaction according to embodiments of the present disclosure;
FIG. 3B is a schematic diagram of a pinching state of a virtual hand according to embodiments of the present disclosure;
FIG. 3C is a schematic diagram of a releasing state of a virtual hand according to embodiments of the present disclosure;
FIG. 3D is a schematic structural diagram of an apparatus for interaction according to embodiments of the present disclosure;
FIG. 4A is a flowchart of a method for interaction according to embodiments of the present disclosure;
FIG. 4B is a schematic diagram of a gesture to trigger human-computer interaction according to embodiments of the present disclosure;
FIG. 4C is a schematic structural diagram of an apparatus for interaction according to embodiments of the present disclosure;
FIG. 5A is a flowchart of a method for gesture control according to embodiments of the present disclosure;
FIG. 5B is a schematic diagram of a gesture of a first operation according to embodiments of the present disclosure;
FIG. 5C is a schematic diagram of a gesture of a second operation according to embodiments of the present disclosure;
FIG. 5D is a schematic structural diagram of an apparatus for gesture control according to embodiments of the present disclosure; and
FIG. 6 is a schematic structural diagram of an electronic device according to embodiments of the present disclosure.

### DETAILED DESCRIPTION

Embodiments of the present disclosure will be described in more detail below with reference to the accompanying drawings. While certain embodiments of the present disclosure are shown in the drawings, it is to be understood that the present disclosure may be implemented in various forms, and should not be construed as limited to the embodiments set forth herein. Instead, these embodiments are provided for a more thorough and complete understanding of the present disclosure.. It should be understood that the drawings and embodiments of the present disclosure are for exemplary purposes only and are not intended to limit the scope of the present disclosure.

It should be understood that the steps recited in the method implementations of the present disclosure may be performed in different orders, and / or in parallel. Further, the method implementations may include additional steps and / or omit performing the illustrated steps. The scope of the present disclosure is not limited in this respect.

As used herein, the term "including" and its variations are open and inclusive, that is, "including but not limited to". The term "based on" is "based at least in part on". The term "one embodiment" means "at least one embodiment"; the term "another embodiment" means "at least one further embodiment"; the term "some embodiments" means "at least some embodiments". The relevant definition of other terms will be given below.

It should be noted that concepts such as "first" and "second" mentioned in this disclosure are merely used to distinguish different apparatuses, modules, or units, and are not intended to limit the order of functions performed by the apparatuses, modules, or units or the mutual dependency relationship.

It should be noted that the modification of "a" and "a plurality of" mentioned in this disclosure is illustrative and not limiting. Those skilled in the art should understand unless otherwise explicitly stated in the context, the modification should be understood as "one or more".

The names of messages or information interacted between multiple devices in embodiments of the present disclosure are for illustrative purposes only and are not intended to limit the scope of such messages or information.

At present, VR hardware devices on the market are mainly VR helmet devices which allow people to immerse themselves in a virtual world after wearing them. At present, the interaction mode with the VR helmet device is mainly through interaction with a handheld handle and the handle is connected with the helmet in a Bluetooth mode. Information such as the position and the key of the handle is transmitted to the helmet, and the helmet makes corresponding interaction. At present, the defect of the handheld handle is that the interaction mode is relatively dependent on the handle. When the handle runs out of power, this convenient and reliable interaction device is lost. Currently, many handles are heavy and thick, and holding them for a long time will be a burden. VR values immersion, and holding the handheld handle for interactive operation is not conducive to the user's immersive experience.

In some embodiments, the virtual ray is constructed through the position information of the human body, thereby determining the position of the virtual cursor according to the virtual ray, avoiding using the handle to operate, achieving bare-hand manipulation, and improving user experience. The following will provide a detailed introduction to the method of determining a virtual cursor in a virtual reality scene proposed by embodiments of the present application with reference to the accompanying drawings.

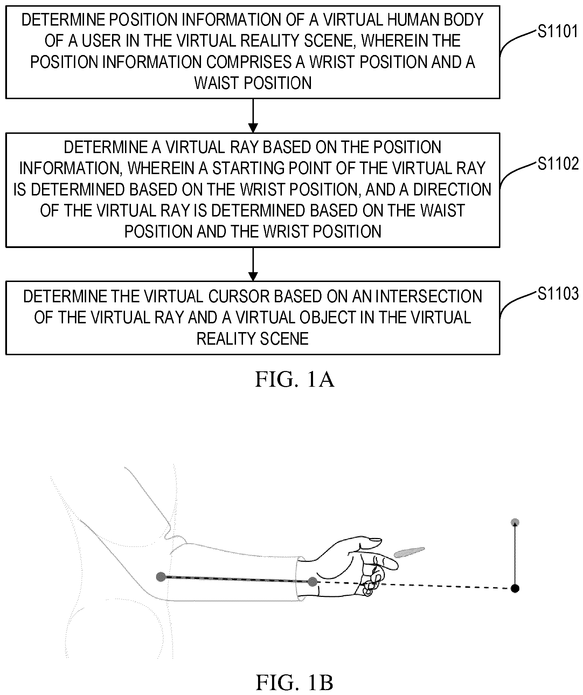

FIG. 1A is a flowchart of a method of determining a virtual cursor in a virtual reality scene according to an embodiment of the present disclosure. This embodiment may be applied to a case of virtual reality or augmented reality and the method may be performed by an apparatus for determining a virtual cursor device in a virtual reality scene. The apparatus for determining a virtual cursor device in a virtual reality scene may be implemented in software and / or hardware, and the apparatus for determining a virtual cursor device in a virtual reality scene may be configured in a virtual reality (VR) device, an augmented reality (AR) device, or a mixed reality (MR) device.

As shown in FIG. 1A, the method of determining a virtual cursor in a virtual reality scene provided by an embodiment of the present disclosure mainly includes the following steps:
S1101: position information of a virtual human body of a user in the virtual reality scene is determined, wherein the position information comprises a wrist position and a waist position.

The user may have a corresponding virtual human body in the virtual reality scene, the virtual human body may not be displayed in the virtual reality scene. The virtual human body or the avatar corresponding to the user may be displayed in the virtual reality scene.

There is a corresponding relationship between the virtual human body or the avatar and the real body of the user. The position information of the virtual human body or the avatar may be determined by the virtual reality device identifying and tracking the real human body of the user.

For example, in some embodiments, the virtual reality device may be provided with a camera, or may be externally connected to a camera. After the virtual reality device is turned on, the device starts to display a user interface, and starts the camera, and the camera is turned on, the device captures the human body. In this embodiment, it is only necessary to know where the human body is located. Therefore, only the position information of the human body may be obtained and this embodiment does not limit whether to obtain color information.

Alternatively, in order to reduce the storage and operation of the data amount, only the position information of the human body is obtained in this embodiment, and the color information of the human body does not need to be obtained.

Further, due to the fact that the user mostly uses the upper body to control the object when using the virtual reality device, the position information of the human body may include position information of the upper body of the human body, such as, position information of the upper body trunk, position information of the two arms, and the like.

In some embodiments, the virtual reality device has a binocular camera, and the binocular camera obtains the position information of the human body. Example virtual reality devices are VR devices, augmented reality (AR) devices, or mixed reality (MR) devices.

In some embodiments, the binocular camera is provided with two cameras. The binocular camera is like two eyes of a human, which may obtain position information of the captured object through stereo imaging. That is, the world seen by the human eye is three-dimensional, and the world captured by the binocular camera is also three-dimensional. In addition, the number of the cameras may not be limited as long as the position information of the object may be obtained.

In some embodiments, the virtual reality device locates its spatial position and posture through positioning devices, and may determine the position information of the virtual human body based on the predetermined human body model of a virtual human body and the positioning position of the virtual reality device. The virtual reality device is worn on the user's head, and thus the head position information of the virtual human body may be determined based on the position information of the virtual reality device. Waist position information of the virtual human body may be further determined by the predetermined human body model.

S1102: a virtual ray is determined based on the position information, wherein a starting point of the virtual ray is determined based on the wrist position, and a direction of the virtual ray is determined based on the waist position and the wrist position.

In this embodiment, after obtaining the position information, the joint position of the human body is determined based on the position information, and the virtual ray is constructed based on the joint position.

Specifically, a line segment is determined according to the two joint positions, and an extension line of the line segment is determined as a virtual ray. The joint position may be set according to actual conditions, for example, may be a joint human waist and a human wrist joint, or may be a human wrist joint and an index finger tip, or may be the index finger tip and a third joint of the index finger (that is, a joint between the index finger and a palm), or may be a middle finger tip and a human palm. It should be noted that, in this embodiment, joint positions are only described and are not limited.

When the user uses the virtual reality device, a system will create a virtual reality scene, and the virtual reality scene may have a virtual object. The virtual object may include a virtual screen, and the virtual object may be any one of: a virtual character, a virtual scene, and the like. Alternatively, to adapt to user usage habits, the virtual screen may be rectangular.

It should be noted that the virtual ray is usually not a real ray and is usually not an image displayed in the virtual reality scene, but is an abstract line introduced for spatial computing.

The virtual ray may be directly displayed in the virtual reality scene.

In a possible implementation, determining the virtual ray based on the position information includes: obtaining positioning information and gesture recognition information of a virtual reality device, and determining the waist position and the wrist position based on the positioning information and the gesture recognition information; determining the virtual ray with the wrist position as the starting point and based on an extending direction of the waist position and the wrist position.

In this embodiment, the position information is input into a pre-trained recognition model to recognize the waist position and the wrist position. Both the waist position and the wrist position are represented by coordinate points in the world coordinate system.

Specifically, the direction of the virtual ray changes with a direction change of a line segment between the waist position and the wrist position.

As shown in FIG. 1B, in this embodiment, connecting points of the waist position and the wrist position are connected into a line segment, and an extension line of the line segment to the wrist direction is used as a virtual ray.

In this embodiment, the virtual ray is constructed by using the waist position and the wrist position. The waist of the human body is basically fixed, and the wrist can be rotated only by moving the forearm, so that the angle and direction of the virtual ray can be controlled through the forearm.

Further, a degree of freedom of the waist position on the X-axis is consistent with the degree of freedom of head position of the user on the X-axis; and the degree of freedom of the waist position on the Z-axis is consistent with the degree of freedom of the head position of the user on the Z-axis.

In this embodiment, after the waist position is determined, it remains unchanged on the Y-axis. The degree of freedom (dof) of the waist position keeps consistent with the dof of the head position on the X-axis and Z-axis, that is, the waist moves with the movement of the head on the X-axis and Z-axis.

S1103: the virtual cursor is determined based on an intersection of the virtual ray and a virtual object in the virtual reality scene.

The virtual cursor may be any one of a cross cursor, a vertical cursor, an arrow cursor, and a hand cursor, which is not limited in this embodiment.

In a possible implementation, a position of an intersection in the virtual object is used as a virtual cursor.

In another possible implementation, the position of the virtual cursor may also be determined by using another method. For example, the intersection point of the virtual ray and the virtual object is taken as a starting point and a fixed distance extended to the inward direction of the virtual object is taken as the position of the virtual cursor, which may prevent the virtual cursor from obstructing nearby objects in the virtual scene.

The virtual cursor is configured to operate a virtual object in the virtual scene, and the specific operation mode is not limited in this embodiment. For example, if the virtual cursor stays on a virtual object for more than 1 second, the virtual object is selected.

Further, the first object that a straight line determined by the virtual cursor along the virtual object in the virtual scene is used as the selected virtual object.

In one embodiment of the present disclosure, the virtual ray and the virtual cursor are displayed in a virtual reality scene.

The method of determining a virtual cursor in a virtual reality scene provided by embodiments of the present disclosure includes: determining position information of a virtual human body of a user in the virtual reality scene, wherein the position information comprises a wrist position and a waist position; determining a virtual ray based on the position information, wherein a starting point of the virtual ray is determined based on the wrist position, and a direction of the virtual ray is determined based on the waist position and the wrist position; and determining the virtual cursor based on an intersection of the virtual ray and a virtual object in the virtual reality scene. According to the embodiment of the present disclosure, the virtual ray is constructed through the position information of the human body, thereby determining the position of the virtual cursor according to the virtual ray, avoiding using the handle to operate, achieving bare-hand manipulation, and improving user experience.

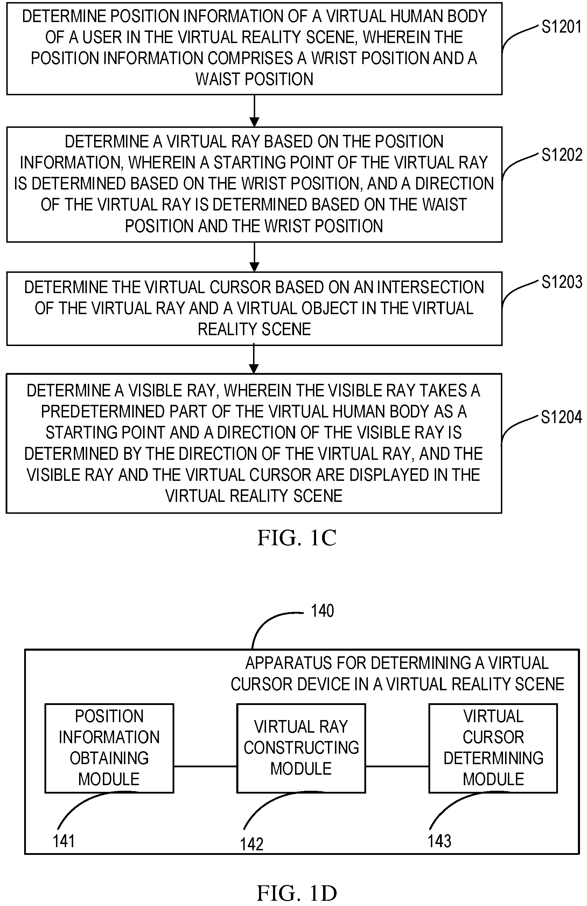

Based on the above embodiments, embodiments of the present disclosure optimize the method of determining a virtual cursor in a virtual reality scene. As shown in FIG. 1C, the method of determining a virtual cursor in a virtual reality scene after optimization mainly includes the following steps:
S1201: position information of a virtual human body of a user in the virtual reality scene is determined, wherein the position information comprises a wrist position and a waist position.
S1202: a virtual ray is determined based on the position information, wherein a starting point of the virtual ray is determined based on the wrist position, and a direction of the virtual ray is determined based on the waist position and the wrist position.
S1203: the virtual cursor is determined based on an intersection of the virtual ray and a virtual object in the virtual reality scene.

In this embodiment, steps S1201-S1203 are the same as the specific execution processes of steps S1101-S1103 in the foregoing embodiments, the descriptions in the foregoing embodiments may be referred to, and details are not repeated herein in this embodiment.

S1204: a visible ray is determined, wherein the visible ray takes a predetermined part of the virtual human body as a starting point and a direction of the visible ray is determined by the direction of the virtual ray, and the visible ray and the virtual cursor are displayed in the virtual reality scene.

In this embodiment, the visible ray may be understood as a visible, tangible, colored ray that may be seen by human eyes. The shape of the visible ray may be designed according to actual conditions, and may be an elongated cylinder, an elongated cube, or the like. The color of the visible ray may also be designed, and the color may be red, purple, etc., and is not specifically limited in this embodiment.

In a possible implementation, the predetermined part of the human body includes at least one of: a fist, a thumb tip, an index finger tip, a middle finger tip, a ring finger tip, and a little finger tip.

Specifically, when the user makes a fist, the visible ray may be emitted from the fist of the user. When the user only extends the index finger and clenches other fingers, the visible ray may be emitted from the index finger tip of the user. When the user only extends the thumb and clenches other fingers, the visible ray may be emitted from the thumb tip of the user.

In addition, a visible ray emitted from the middle finger, the ring finger and the little finger is similar to the visible ray emitted from the index finger, which may refer to the above description, and details are not repeated herein.

Further, as shown in FIG. 1B, when the visible ray is emitted from the index finger tip, the direction of the visible ray is determined by the direction of the virtual ray. Further, the direction of the visible ray is determined according to the translation distance and direction of the index finger tip and the wrist position, to ensure that the intersection of the visible ray and the virtual object is consistent with the coordinate of the virtual cursor.

In this embodiment, the visible rays are constructed, so that the user can see the rays with naked eye, and the user can conveniently operate and control.

FIG. 1D is a schematic structural diagram of an apparatus for determining a virtual cursor in a virtual reality scene according to an embodiment of the present disclosure. This embodiment may be applied to a case of virtual reality or augmented reality The apparatus for determining a virtual cursor device in a virtual reality scene may be implemented in software and / or hardware, and the apparatus for determining a virtual cursor device in a virtual reality scene may be configured in a virtual reality (VR) device, an augmented reality (AR) device, or a mixed reality (MR) device.

As shown in FIG. 1D, the apparatus for determining a virtual cursor device in a virtual reality scene 140 provided by embodiments of the present disclosure mainly includes: a position information obtaining module 141, a virtual ray constructing module 142, and a virtual cursor determining module 143.

The position information obtaining module 141 is configured to determine position information of a virtual human body of a user in a virtual reality scene, where the position information includes a wrist position and a waist position.

The virtual ray constructing module 142 is configured to determine a virtual ray based on the position information, wherein a starting point of the virtual ray is determined based on the wrist position, and a direction of the virtual ray is determined based on the waist position and the wrist position.

The virtual cursor determining module 143 is configured to determine the virtual cursor based on an intersection of the virtual ray and a virtual object in the virtual reality scene.

In a possible implementation, the virtual ray constructing module 142 includes: a human body position determining unit configured to obtain positioning information and gesture recognition information of a virtual reality device, and determine the waist position and the wrist position based on the positioning information and the gesture recognition information; and a virtual ray constructing unit configured to determine the virtual ray with the wrist position as the starting point and based on an extending direction of the waist position and the wrist position.

Specifically, the direction of the virtual ray changes with a direction change of a line segment between the waist position and the wrist position.

Specifically, a degree of freedom of the waist position on the X-axis is consistent with the degree of freedom of head position of the user on the X-axis; and the degree of freedom of the waist position on the Z-axis is consistent with the degree of freedom of the head position of the user on the Z-axis.

In a possible implementation, the apparatus further includes: a display module configured to display the virtual ray and the virtual cursor in the virtual reality scene.

In a possible implementation, the apparatus further includes: a visible ray constructing module configured to determine a visible ray, wherein the visible ray takes a predetermined part of the virtual human body as a starting point and a direction of the visible ray is determined by the direction of the virtual ray, and displaying the visible ray and the virtual cursor in the virtual reality scene.

Specifically, the predetermined part of the human body comprises at least one of: a fist, a thumb tip, an index finger tip, a middle finger tip, a ring finger tip, or a little finger tip.

The apparatus for determining a virtual cursor device in a virtual reality scene provided by embodiments of the present disclosure may perform the steps performed in the method of determining the virtual cursor in virtual reality virtual reality scene provided by the method embodiments of the present disclosure may be performed. The detailed steps and beneficial effects are not elaborated herein.

The names of messages or information interacted between multiple apparatuses in embodiments of the present disclosure are for illustrative purposes only and are not intended to limit the scope of such messages or information.

The method for interaction provided by embodiments of the present application is described in detail below with reference to the accompanying drawings.

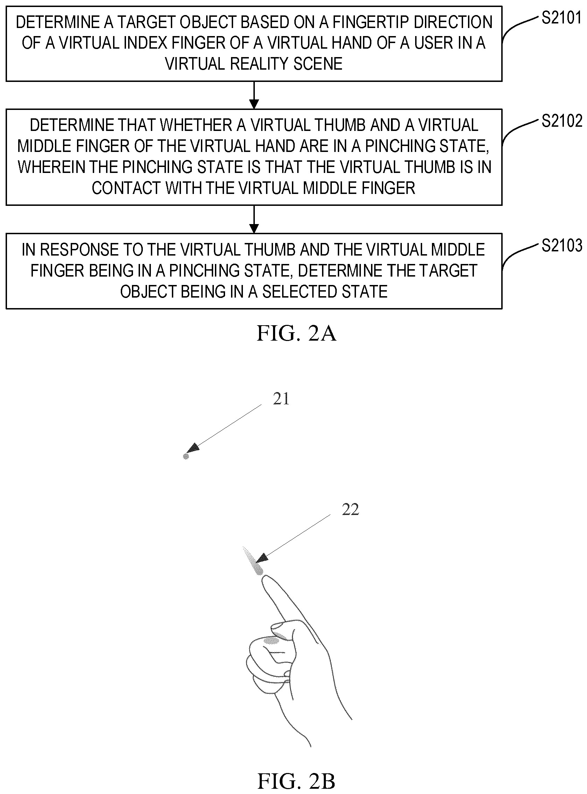

FIG. 2A is a flowchart of a method for interaction according to an embodiment of the present disclosure. This embodiment may be applied to a case of human-computer interaction in virtual reality or augmented reality and the method may be performed by an apparatus for interaction. The apparatus for interaction may be implemented in software and / or hardware, and the apparatus for interaction may be configured in a virtual reality (VR) device, an augmented reality (AR) device, or a mixed reality (MR) device.

As shown in FIG. 2A, the method for interaction provided by the embodiment of the present disclosure mainly includes the following steps:
S2101: a target object is determined based on a fingertip direction of a virtual index finger of a virtual hand of a user in a virtual reality scene.

The virtual device may be any one or more of a VR device, an AR device, and a MR device. The type of the virtual device is not specifically limited in this embodiment. Alternatively, the virtual device is a head-mounted virtual device.

Before determining the target object based on the fingertip direction of the virtual index finger of the virtual hand in the virtual reality scene, the method further includes: obtaining depth information of a biological hand in real time, and determining, based on the depth information, position information such as a finger, a palm, a wrist, and the like included in the virtual hand in the virtual device.

The biological hand refers to a real hand of the user, and the depth information may be understood as the distance in the space between various positions of the biological hand. Further, a sensor emits modulated near-infrared light which is reflected after encountering an object, and the sensor converts the distance of a photographed object by calculating a time difference or a phase difference between light emission and a reflection, so as to generate the depth information.

In this embodiment, the depth information of the biological hand may be obtained in real time through a sensor and a depth camera on the virtual device. Specifically, the positional relationship between the biological hand and the sensor in the virtual device, real position of the sensor and virtual coordinate of the sensor are first obtained through the depth camera, and the real position of the wrist of the biological hand is calculated according to the real position of the sensor. Then, the real position of the wrist and the real position of the fingertip may be mapped into the virtual space based on the known virtual coordinate of the sensor, so that the spatial coordinate of the wrist and the spatial coordinate of the fingertip are obtained. Because the positional relationship (hand joint information) between the joints of the biological hand is known, the coordinate of each joint of the hand in the virtual space can be calculated according to the spatial coordinate of the wrist and the spatial coordinate of the fingertip, thereby filling to generate a virtual hand and obtaining the spatial coordinates of the whole virtual hand in the VR system.

In another embodiment, the depth information of the biological hand may be obtained through a binocular camera or a multi-lens camera.

The target object is an operable object selected in the virtual reality scene. The foregoing object may be a virtual object existing in the virtual reality scene, such as a virtual table, a virtual vehicle, etc. The object may also be a virtual character in the virtual reality scene, or may be a key or a link that may be operated in the virtual device. This embodiment does not specifically limit the target object.

Further, a target virtual ray is emitted at the virtual index finger tip, and an operation object selected by the target virtual ray is determined as the target object.

In a possible implementation, determining the target object based on the fingertip direction of the virtual index finger of the virtual hand of the user in the virtual reality scene includes: emitting a target virtual ray by taking the virtual index finger tip as an endpoint; and determining the first virtual object that is in contact with the target virtual ray in the virtual reality scene as the target object.

When the user uses the virtual reality device, the system will create a virtual reality scene. The virtual scene includes a virtual item or a virtual object.

It should be noted that the target virtual ray is usually not a real ray, but is an abstract line introduced for spatial computing. The target virtual ray may be displayed or may not be displayed in the virtual reality scene.

In this embodiment, in order to facilitate the user to quickly select the target object during usage, the target virtual ray may be a visible ray. The visible ray can be understood as a visible, tangible, colored ray that can be seen by human eyes. The shape of the visible ray may be designed according to actual conditions, and may be an elongated cylinder, an elongated cube, or the like. The color of the visible ray may also be designed, and the color may be red, purple, etc., and is not specifically limited in this embodiment.

Specifically, as shown in FIG. 2B, the thumb, middle finger, ring finger and little finger of the virtual hand make a fist and the index finger extends. The target virtual ray 22 is emitted from the index finger tip, and the first object in contact with the target virtual ray 22 is determined as the target object.

In this embodiment, the target object is determined based on the virtual ray, so that the user may easily select the target object.

In a possible implementation, emitting the target virtual ray by taking the virtual index finger tip as the endpoint further includes: determining an initial virtual ray by taking the wrist of the virtual hand as the endpoint and taking an extension line between the designated part of the virtual human body and the wrist of the virtual hand in the virtual reality scene as the direction; and determining the target virtual ray based on the positional relationship between the wrist of the virtual hand and the fingertip of the virtual index finger, and the initial virtual ray.

In this embodiment, the designated part of the human body is the waist of the human body. A line segment is determined according to the waist of the human body and the wrist of the virtual hand, and an initial virtual ray is constructed with the wrist of the virtual hand as an endpoint and based on extending direction of the waist of the human body and the wrist of the human body. Specifically, the direction of the virtual ray changes with a direction change of a line segment between the waist of the human body and the wrist of the human body.

In this embodiment, a displacement vector between the wrist of the virtual hand and the virtual index finger tip is calculated, and the initial virtual ray is translated according to the displacement vector to obtain the target virtual ray.

In this embodiment, the initial virtual ray is constructed by the waist and the wrist, the target virtual camera is obtained after the initial virtual ray is translated. The determined virtual ray is more accurate because the waist of human body is fixed.

S2102: whether a virtual thumb and a virtual middle finger of the virtual hand are in a pinching state is determined, wherein the pinching state is that the virtual thumb is in contact with the virtual middle finger.

In a possible implementation, a middle finger fingertip ball is bound to the virtual middle finger, a ring finger fingertip ball is bound on the virtual ring finger, a little finger fingertip ball is bound on the virtual small finger, and a palm ball is bound on the virtual palm. If the middle finger fingertip ball, the ring finger fingertip ball, and the little finger fingertip ball are tangent to or intersected with the palm ball, the condition of the virtual hand making a fist is satisfied. Then, a thumb fingertip ball is bound on the virtual thumb, and the middle finger cube is bound on the virtual middle finger. When the thumb fingertip ball is tangent to or intersects with the middle finger cube, the virtual thumb tip and the virtual middle finger are in a pinching state. A schematic diagram of the virtual thumb and the virtual middle finger in a pinching state is shown in FIG. 2B.

The thumb fingertip ball always moves with the movement of the position information of the virtual thumb. The index finger cube may be a rectangular prism which covers the whole middle finger, and always moves with the movement of the position information of the virtual index finger.

In this embodiment, if the thumb fingertip ball is tangent to or intersects with the index finger cube, it indicates that the thumb is bent, and the thumb tip is in contact with the middle finger. At this time, it is determined that they are in the pinching state. If the thumb tip ball is not tangent to or does not intersect with the middle finger cube, that is, in a separated state, then the thumb tip is not in contact with the middle finger, and at this time, it is determined that they are not in the pinching state.

In the embodiment, the bending degree of the thumb is determined by determining the positional relationship between the thumb fingertip ball and the middle finger cube, so that whether the whole hand occurs a pinching action is determined. This method of determining the state of the hand by binding a ball solves the problem of high precision requirements for traditional bare hand operations, improves the stability of virtual hand positioning, and reduces precision requirements, thereby enhancing the user's immersive experience.

In a possible implementation, a first distance between the fingertip of the virtual middle finger and the virtual palm, a second distance between the fingertip of the ring finger and the virtual palm and a third distance between the fingertip of the little finger and the virtual palm are calculated separately. When the first distance, the second distance, and the third distance are all less than a first threshold, the condition of the virtual hand making a fist is satisfied. Then, a fourth distance between the fingertip of the thumb and the fingertip of the middle finger is calculated. When the fourth distance is less than a second threshold, it is determined that the fingertip of the virtual thumb and the virtual middle finger are in the pinching state.

In the embodiment, by determining the distance between the fingertip of the finger and the palm, the bending degree of the finger is determined so as to distinguish whether the whole hand occurs an action of making a fist, the stability of positioning the virtual hand is improved, the accuracy requirement is reduced, and then the immersive experience of the user is improved.

S2103: in response to the virtual thumb and the virtual middle finger being in a pinching state, the target object being in a selected state is determined.

After determining that the target object is in the selected state, interaction is performed according to the action state of the virtual hand. If the target object is determined to be the selected state, the interaction may not be performed according to the action state of the virtual hand. In this embodiment, the interaction process is split into two parts, the accuracy of interaction can be improved, and misoperation may be avoided.

Embodiments of the present disclosure provide a method for interaction, including: determining a target object based on a fingertip direction of a virtual index finger of a virtual hand of a user in a virtual reality scene; determining that whether a virtual thumb and a virtual middle finger of the virtual hand are in a pinching state, wherein the pinching state is that the virtual thumb is in contact with the virtual middle finger; and in response to the virtual thumb and the virtual middle finger being in a pinching state, determining that the target object is in a selected state. According to embodiments of the resent disclosure, the target object is selected through the index finger, the interaction with the target object is completed according to actions of other fingers, the problem of interaction between biological hands and virtual objects is solved. Further, the target object is selected through the index finger, which improves the selection precision of the target object.

In a possible implementation, the method further includes: when it is detected that the virtual thumb and the virtual middle finger change from the pinching state to the releasing state, triggering a click operation instruction, where the release state is that the virtual thumb is not in contact with the virtual middle finger.

If the thumb fingertip ball is separated from the middle finger cube, the virtual thumb fingertip and the virtual middle finger are in a releasing state. The response operation corresponding to the click operation instruction is determined by the correspondence between the instruction pre-set by the target object and the response operation. For example, the response operation corresponding to the click operation instruction may be performing a determining operation, or may be performing the operation of opening a dropdown menu, or may be selecting a target object. In this embodiment, no specific limitation is made.

In embodiments of the present disclosure, the pinching state decided according to the distance between the middle finger and the thumb being smaller than a specified threshold value. A single-click operation is performed after the action of pinching and releasing the virtual thumb and the virtual thumb is performed. In this embodiment, the correspondence between the finger action and the instruction is defined, and the problem of interaction between the biological hand and the virtual object is solved.

In a possible implementation, the method further includes: when it is detected that the virtual index finger moves, triggering a drag operation instruction; in response to the drag operation instruction, obtaining movement information of the virtual index finger in real time; determining drag information of the target object based on the movement information of the virtual index finger; and controlling the target object to perform a movement operation corresponding to the drag information.

The drag operation instruction may be understood as an instruction that controls the target object to move. Further, when it is detected that the position of the virtual index finger tip changes, it is determined that the movement of the virtual index finger is detected, and the drag operation instruction is triggered.

The movement information of the virtual index finger includes a moving distance and a moving direction, and the drag information includes a drag distance and a drag direction. There is a one-to-one correspondence between the moving distance and the drag distance, and there is a one-to-one correspondence between the moving direction and the drag direction.

Further, a first correspondence between the moving distance and the drag distance, a second correspondence between the moving direction and the drag direction is pre-established. The drag distance is determined based on the obtained moving distance of the virtual index finger and the pre-established first correspondence; and a drag direction is determined based on the obtained moving direction of the virtual index finger and the pre-established second correspondence.

For example, if the movement information is to move 3 millimeters to the right, 3 millimeters in the first correspondence corresponds to 9 millimeters, and in the second correspondence, moving to the right corresponds to moving to the right. Therefore, it is determined that the drag information is moving to the right by 9 millimeters. The first correspondence and the second correspondence may be set according to actual conditions, and only example descriptions are provided in this embodiment.

Further, obtaining the movement information of virtual index finger in real time includes the fingertip coordinates of the virtual index finger in the previous video frame and the fingertip coordinates of the virtual index finger in the current video frame, and the vector difference of the two time coordinates is determined as the movement information.

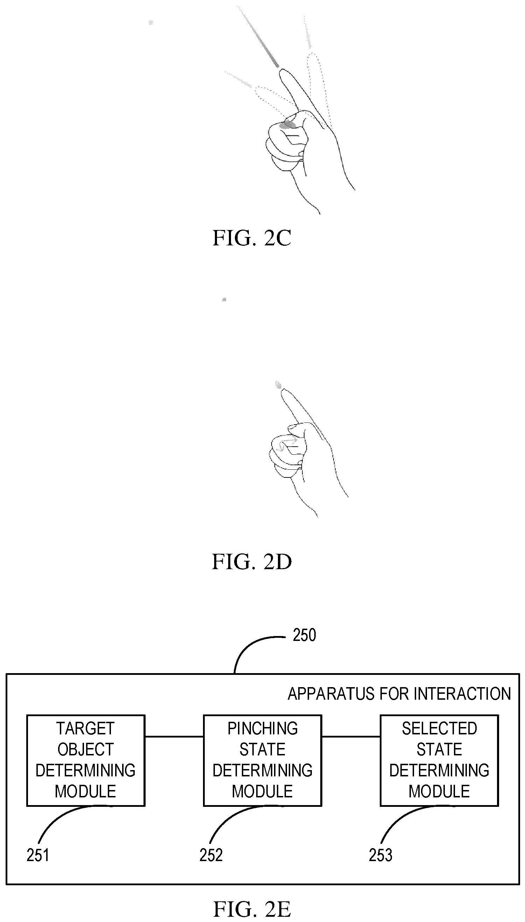

Specifically, as shown in FIG. 2C, as the virtual index finger moves, the target virtual ray moves according to the index finger, and then the target virtual ray drags the target object to move.

In a possible implementation, after controlling the target object to perform the drag operation corresponding to the drag information, the method further includes: controlling the target object to stop moving when it is detected that the virtual thumb and the virtual middle finger are in the releasing state.

In this embodiment, the distance between the virtual thumb and the virtual middle finger is obtained. If the distance between the virtual thumb and the virtual middle finger is greater than a distance threshold, it indicates that the virtual thumb and the virtual middle finger are in the releasing state, at this time, the target object is controlled to stop moving, and the target object is placed in the current position.

In this embodiment, the releasing state of the virtual thumb and virtual middle finger as a condition of dragging sliding information solves the problem of interaction between biological hands and virtual objects.

In a possible implementation, the method further includes: when it is detected that the virtual thumb tip slides on the virtual middle finger, triggering a sliding operation instruction; in response to the sliding operation instruction, obtaining sliding information of the virtual thumb tip on the virtual middle finger; and controlling the current page to perform a sliding operation based on the sliding information, where the current page is the page where the target object is located.

The sliding information includes a sliding direction and sliding information. The current page is a page where the target object is located, that is, an uppermost page shown on the virtual screen, such as a document on a page, a game interface, etc.

In this embodiment, a thumb fingertip ball is bound to the virtual thumb and a cube is bound to the virtual middle finger. The sliding information of the thumb fingertip ball on the cube is obtained and the sliding information controls the current page to perform the sliding operation.

Specifically, as shown in FIG. 2D, the target virtual ray is aimed at a recognition area to be slid. The middle finger, the ring finger and the little finger are hold together, the index finger controls the direction of the target virtual ray, the thumb slides on the side surface of the middle finger, and the page performs the page turning operation in response to the sliding information.

In a possible implementation, obtaining the sliding information of the virtual thumb tip on the virtual middle finger includes: obtaining a start position and an end position of the virtual thumb tip on the virtual middle finger; and determining a difference between the end position and the start position as the sliding information.

A starting position coordinate and a stopping position coordinate of the thumb fingertip ball on the cube for index finger are obtained, a sliding direction and a sliding distance are calculated based on the starting position coordinate and the stopping position coordinate, and the current page on the virtual device display interface is controlled to perform corresponding movement (for example, the page is controlled to flip up or down; a virtual task in a game is controlled to move) , according to the sliding direction and the sliding information.

FIG. 2E is a schematic structural diagram of an apparatus for interaction according to an embodiment of the present disclosure. This embodiment may be applied to a case of human-computer interaction in virtual reality or augmented reality, and the apparatus for interaction may be implemented in software and / or hardware. The apparatus for interaction may be configured in a virtual reality (VR) device, an augmented reality (AR) device, or a mixed reality (MR) device.

As shown in FIG. 2E, the apparatus for interaction 250 provided by embodiments of the present disclosure mainly includes a target object determining module 251, a pinching state determining module 252, and a selected state determining module 253.

The target object determining module 251 is configured to determine a target object based on a fingertip direction of a virtual index finger of a virtual hand of a user in a virtual reality scene; the pinching state determining module 252 is configured to determine whether a virtual thumb and a virtual middle finger of the virtual hand are in a pinching state, wherein the pinching state is that the virtual thumb is in contact with the virtual middle finger; and the selected state determining module 253 is configured to, in response to the virtual thumb and the virtual middle finger being in a pinching state, determine that the target object is in a selected state.

In a possible implementation, the target object determining module 251 includes: a target virtual ray emitting unit configured to emit a target virtual ray by taking the virtual index finger tip as an endpoint; and a target object determining unit configured to determine the first virtual object that is in contact with the target virtual ray in the virtual reality scene as the target object.

In a possible implementation, the target virtual ray emitting unit is specifically configured to determine an initial virtual ray by taking the wrist of the virtual hand as the endpoint and taking an extension line between the designated part of the virtual human body and the wrist of the virtual hand in the virtual reality scene as the direction; and determine the target virtual ray based on the positional relationship between the wrist of the virtual hand and the fingertip of the virtual index finger, and the initial virtual ray.

In a possible implementation, the apparatus further includes: a click operation module configured to, when it is detected that the virtual thumb and the virtual middle finger change from the pinching state to the releasing state, trigger a click operation instruction, where the release state is that the virtual thumb is not in contact with the virtual middle finger.

In a possible implementation, the apparatus further includes: a movement operation module configured to when it is detected that the virtual index finger moves, trigger a drag operation instruction; in response to the drag operation instruction, obtain movement information of the virtual index finger in real time; determine drag information of the target object based on the movement information of the virtual index finger; and control the target object to perform a movement operation corresponding to the drag information.

In a possible implementation, the movement operation module further includes a move stopping unit configured to after controlling the target object to perform the drag operation corresponding to the drag information, control the target object to stop moving when it is detected that the virtual thumb and the virtual middle finger are in the releasing state.

In a possible implementation, the apparatus further includes: a sliding operation module configured to, when it is detected that the virtual thumb tip slides on the virtual middle finger, trigger a sliding operation instruction; in response to the sliding operation instruction, obtain sliding information of the virtual thumb tip on the virtual middle finger; and control the current page to perform a sliding operation based on the sliding information, where the current page is the page where the target object is located.

In a possible implementation, obtaining the sliding information of the virtual thumb tip on the virtual middle finger includes: obtaining a start position and an end position of the virtual thumb tip on the virtual middle finger; and determining a difference between the end position and the start position as the sliding information.

The method for interaction provided by embodiments of the present application is described in detail below with reference to the accompanying drawings.

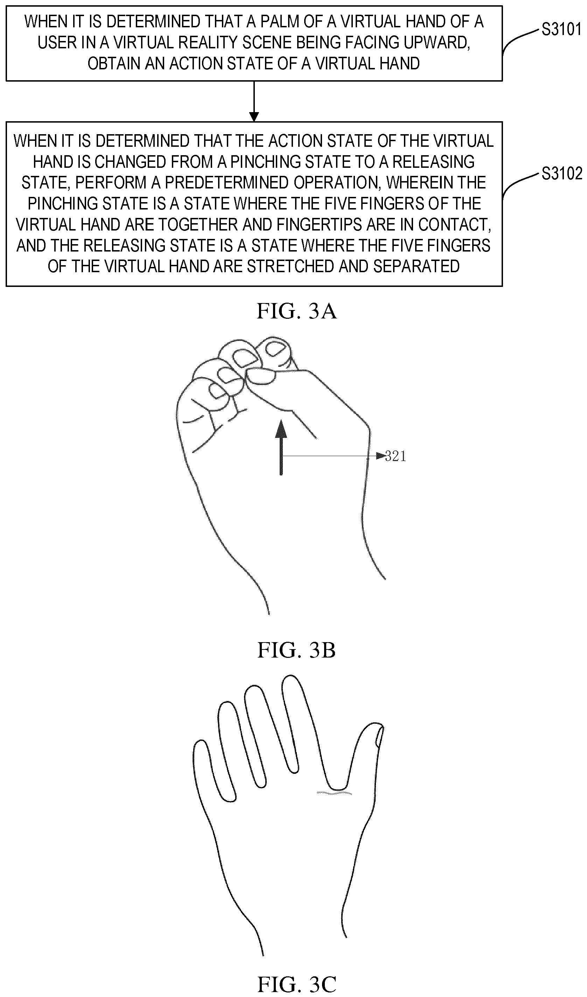

FIG. 3A is a flowchart of a method for interaction according to an embodiment of the present disclosure. This embodiment may be applied to a case of human-computer interaction in virtual reality or augmented reality and the method may be performed by an apparatus for interaction. The apparatus for interaction may be implemented in software and / or hardware, and the apparatus for interaction may be configured in a virtual reality (VR) device, an augmented reality (AR) device, or a mixed reality (MR) device.

As shown in FIG. 3A, the method for interaction provided by the embodiment of the present disclosure mainly includes the following steps:
S3101: when it is determined that a palm of a virtual hand of a user in a virtual reality scene being facing upward, an action state of a virtual hand is obtained.

The virtual device may be any one or more of a VR device, an AR device, and a MR device. The type of the virtual device is not specifically limited in this embodiment. Alternatively, the virtual device is a head-mounted virtual device.

Before determining that the palm of the virtual hand in the virtual reality scene is facing upward, the method further includes: obtaining depth information of a biological hand in real time, and determining, based on the depth information, position information such as a finger, a palm, a wrist, and the like included in the virtual hand in the virtual device.

The biological hand refers to a real hand of the user, and the depth information may be understood as the distance in the space between various positions of the biological hand. Further, a sensor emits modulated near-infrared light which is reflected after encountering an object, and the sensor converts the distance of a photographed object by calculating a time difference or a phase difference between light emission and a reflection, so as to generate the depth information.

In this embodiment, the depth information of the biological hand may be obtained in real time through a sensor and a depth camera on the virtual device. Specifically, the positional relationship between the biological hand and the sensor in the virtual device, real position of the sensor and virtual coordinate of the sensor are first obtained through the depth camera, and the real position of the wrist of the biological hand is calculated according to the real position of the sensor. Then, the real position of the wrist and the real position of the fingertip may be mapped into the virtual space based on the known virtual coordinate of the sensor, so that the spatial coordinate of the wrist and the spatial coordinate of the fingertip are obtained. Because the positional relationship (hand joint information) between the joints of the biological hand is known, the coordinate of each joint of the hand in the virtual space can be calculated according to the spatial coordinate of the wrist and the spatial coordinate of the fingertip, thereby filling to generate a virtual hand and obtaining the spatial coordinates of the whole virtual hand in the VR system.

In this embodiment, the posture information of the biological hand of the user may be obtained through the camera on the virtual device. The posture information is identified, and whether the palm of the virtual hand is facing upward is decided according to the identification result.

Specifically, whether the palm of the virtual hand is facing upward is determined according to the left and right hands of the user and the position of the thumb. For example, if the virtual hand of the user is the right hand and the thumb is located on the right side of the whole virtual hand, the palm of the virtual hand is determined to be upward. If the virtual hand of the user is the left hand and the thumb is located on the left side of the whole virtual hand, the palm of the virtual hand is determined to be upward.

In a possible implementation, determining that the palm of the virtual hand of the user in the virtual reality scene is facing upward includes: constructing a normal line of the palm perpendicular to the palm plane by taking the palm center position of the virtual hand as a starting point; and determining that the palm of the virtual hand in the virtual device faces upward if the angle between the normal line of the palm and the Y axis of the world coordinate of the virtual reality scene is less than a predetermined threshold.

The predetermined threshold may be set according to actual conditions, which is not specifically limited in the embodiments of the present disclosure.

In one embodiment of the present disclosure, if the normal line of the palm is parallel to the Y-axis of world coordinates, and the direction of the normal line of the palm is the same as the positive direction of the Y-axis, it is determined that the palm of the virtual hand in the virtual device faces upward.

In a possible implementation, a plurality of point coordinates on the normal line of palm are obtained. If the vertical coordinates of the plurality of point coordinates are different and the abscissa is the same, it indicates that the normal line of palm is parallel to the Y-axis of world coordinates.

In this embodiment, the center position of the virtual palm is obtained. A normal line of the palm perpendicular to the palm plane is constructed by taking the palm center position of the virtual hand as a starting point. The solid line 321 with an arrow in FIG. 3B is the normal line of the palm. The center position may be determined according to the coordinates of the whole virtual hand, for example, the center position may be the geometric center of the whole virtual hand, or may be the center of gravity of the whole virtual hand.

In a possible implementation, the normal line of the palm is extended infinitely, and when the extended normal line of the palm and the Y-axis have no intersection, it indicates that the normal line of the palm is parallel to the Y-axis of world coordinates.

Further, two points are arbitrarily taken on the normal line of the palm to construct a normal vector. Two points are arbitrarily taken on the Y-axis to construct a Y-axis vector. The included angle between the normal vector and the Y-axis vector is calculated as the angle between the normal line of the palm and the Y-axis of the world coordinate of the virtual reality scene.

In this embodiment, whether the palm of the virtual hand is facing upward is determined by constructing a normal line of the palm, and this method is simple, convenient and small in calculation.

The action state of the virtual hand is a continuous gesture action made by the virtual hand over a period of time.

In this embodiment, the action state of the virtual hand is determined by obtaining the action state of the biological hand in real time, where the action state of the biological hand corresponds to the action state of the virtual hand one to one.

Step S3102: when it is determined that the action state of the virtual hand is changed from a pinching state to a releasing state, a predetermined operation is performed, wherein the pinching state is a state where the five fingers of the virtual hand are together and fingertips are in contact, and the releasing state is a state where the five fingers of the virtual hand are stretched and separated.

The state where fingertips are in contact state refers to a state in which a virtual thumb is in contact with at least one or more fingers in other four fingers. For example, a pinching state of the virtual hand is shown in FIG. 3B, five fingers of the virtual hand are closed together, five fingers are bent towards the palm to make a fist, and the thumb fingertip is simultaneously in contact with the middle finger tip and the middle finger tip.

The releasing state of the virtual hand is shown in FIG. 3C, and the five fingers are extended and separated from each other.

In a possible implementation, determining that the action state of the virtual hand changes from the pinching state to the releasing state includes: obtaining a first distance between the distal segment of the virtual thumb and the distal segment of the virtual index finger of the virtual hand in real time, where the distal segment is a finger joint on the finger farthest from the palm; and when the first distance is transformed from a first range to a second range, determining that the action state of the virtual hand changes from the pinching state to the releasing state, where the first range is less than the second range.

The distal segment refers to the finger joint on the finger farthest from the palm, that is, the finger joint closest to the fingertip. The first distance refers to the distance between the finger joint closest to the fingertip on the virtual thumb and the fingertip closest to the fingertip on the virtual index finger.

The first range and the second range may be defined according to actual conditions. For example, the first range may be 0-2 centimeters, and the second range may be a range greater than 5 centimeters.

Specifically, when the first distance is in the first range, it is determined that the virtual hand is in the pinching state, and when the first distance is in the second range, it is determined that the virtual hand is in the releasing state.

Further, the first distance is changed from the first range to the second range, which may be understood as that within a specified time, the first distance gradually increases, for example, from 1 centimeter to 6 centimeters, indicating that the first distance changes from the first range to the second range. The specified time may be set according to a time condition. For example, the specified time may be any number in 0-3 seconds, and alternatively, the specified time is 2 seconds.

In this embodiment, the first distance gradually increases from small to large, that is, the distance between the distal segment of the virtual large thumb and the distal segment of the virtual index finger is small to large, indicating that the virtual hand changes from the pinching state to the releasing state. In embodiments of the present disclosure, the action state of the virtual hand is determined through the distance between the distal segment of the virtual thumb and the distal segment of the virtual index finger. The problem of high precision requirements for traditional bare hand operations is solved, the positioning stability of the virtual hand is improved, the accuracy requirement is reduced, and the immersive experience of the user is further improved.

Specifically, calculating the first distance between the distal segment of the virtual thumb and the distal segment of the virtual index finger of the virtual hand includes: binding a first three-dimensional ball at the distal segment of the virtual thumb; binding a second three-dimensional ball at the distal segment of the virtual index finger; and determining the distance between the first three-dimensional ball center and the second three-dimensional ball center as the first distance between the distal segment of the virtual large thumb and the distal segment of the virtual index finger of the virtual hand.

In this embodiment, the first three-dimensional ball is bound at the distal segment of the virtual thumb and the second three-dimensional ball is bound at the distal segment of the virtual index finger.

The three-dimensional ball refers to a spherical model bound on the position information of the finger joint, the first three-dimensional ball always moves with the movement of the position information of the distal segment of the virtual thumb, and the second three-dimensional ball always moves with the movement of the position information of the distal segment of the virtual index finger.

The distance between the first three-dimensional ball center and the second three-dimensional ball center is calculated by the coordinates of the first three-dimensional ball center and the coordinates of the second three-dimensional ball center. Specifically, a vector difference may be calculated according to the coordinates of two ball centers, and the vector length of the vector difference may be used as the distance between the first three-dimensional ball center and the second three-dimensional ball center.

In embodiments of the present disclosure, the distance between the distal segment of the finger is calculated by binding the three-dimensional spherical model, the accuracy of distance calculation is improved, and then the determination precision of the action state of the virtual hand is improved.

In a possible implementation, determining that the action state of the virtual hand changes from the pinching state to the releasing state includes: obtaining a second distance between the fingertips of five fingers of the virtual hand in real time; and when the second distance is transformed from a third range to a fourth range, determining that the action state of the virtual hand is changed from the pinching state to the releasing state, where the third range is less than the fourth range.

The second distance between the fingertips of five fingers may be understood as the closest distance between the thumb and the other four fingers. The closest distance between the thumb tip and the other four finger tips may be determined in the following manner: calculating the distance between the thumb tip and the other four fingers, to obtain four distance values, and determining the minimum value among the four distance values as the closest distance between the thumb tip and the other four finger tips.

Further, a thumb fingertip ball may be bound on the thumb tip and fingertip balls are also bound on a fingertip of each other finger. The distance between the thumb tip and the other four fingers is calculated respectively by using the center coordinate of the thumb fingertip ball and the center coordinate of each other fingertip ball.

The third range and the fourth range may be defined according to actual conditions. For example, the third range may be 0-3 centimeters, and the fourth range may be a range greater than 5 centimeters.

Specifically, when the second distance is in the third range, it is determined that the virtual hand is in the pinching state, and when the second distance is in the fourth range, it is determined that the virtual hand is in the releasing state.

Further, the second distance is changed from the third range to the fourth range, which may be understood as that within the specified time, the second distance gradually increases, for example, from 1 centimeter to 6 centimeters, indicating that the second distance changes from the third range to the fourth range. The specified time may be set according to a time condition. For example, the specified time may be any number in 0-3 seconds, and alternatively, the specified time is 2 seconds.

In this embodiment, the second distance is gradually increased from small to large, that is, the distance between virtual thumb tip and the other finger tips increases from small to large, indicating that the virtual hand is changed from the pinching state to the releasing state. In embodiments of the present disclosure, the action state of the virtual hand is determined through the distance between the virtual thumb tip and the other four finger tips. The problem of high precision requirements for traditional bare hand operations is solved, the positioning stability of the virtual hand is improved, the accuracy requirement is reduced, and the immersive experience of the user is further improved.

In a possible implementation, the predetermined operation includes: returning to a system homepage, invoking a function menu, or invoking a task management page.

The method for interaction provided by embodiments of the present disclosure, which comprises when it is determined that a palm of a virtual hand of a user in a virtual reality scene being facing upward, obtaining an action state of a virtual hand; and when it is determined that the action state of the virtual hand is changed from a pinching state to a releasing state, performing a predetermined operation, wherein the pinching state is a state where the five fingers of the virtual hand are together and fingertips are in contact, and the releasing state is a state where the five fingers of the virtual hand are stretched and separated. According to embodiments of the present disclosure, the problem of interaction between biological hands and virtual objects is solved by interacting with virtual devices based on the actions of virtual fingers when the user's palm is facing upwards.

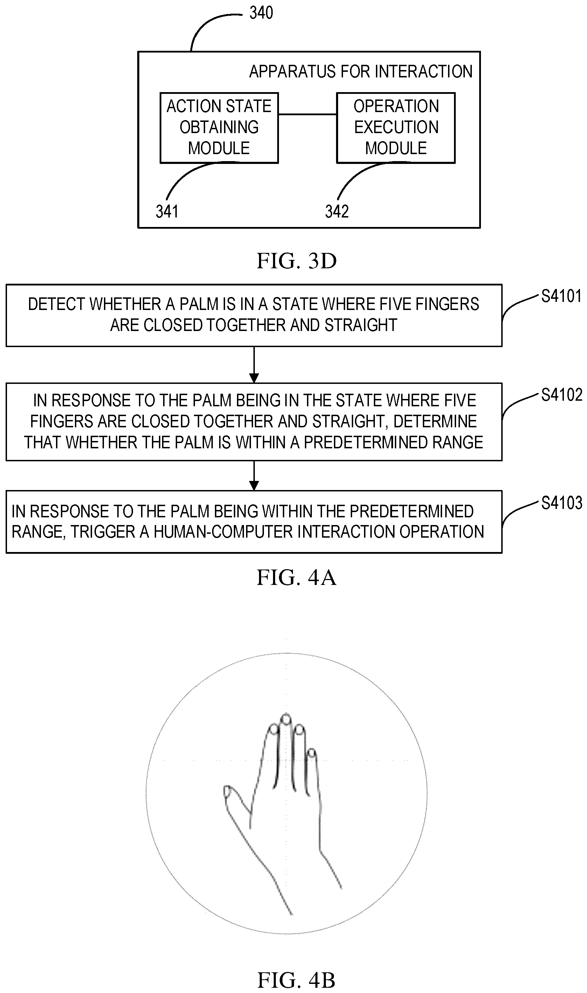

FIG. 3D is a schematic structural diagram of an apparatus for interaction according to an embodiment of the present disclosure. This embodiment may be applied to a case of human-computer interaction in virtual reality or augmented reality, and the apparatus for interaction may be implemented in software and / or hardware. The apparatus for interaction may be configured in a virtual reality (VR) device, an augmented reality (AR) device, or a mixed reality (MR) device.

As shown in FIG. 3D, the apparatus for interaction 340 provided by embodiments of the present disclosure mainly includes an action state obtaining module 341 and an operation execution module 342.

The action state obtaining module 341 is configured to, when it is determined that a palm of a virtual hand of a user in a virtual reality scene being facing upward, obtain an action state of a virtual hand.

The operation performing module 342 is configured to, when it is determined that the action state of the virtual hand is changed from a pinching state to a releasing state, perform a predetermined operation, wherein the pinching state is a state where the five fingers of the virtual hand are together and fingertips are in contact, and the releasing state is a state where the five fingers of the virtual hand are stretched and separated.

In embodiments of the present disclosure, the apparatus further includes: a palm facing upward determination module, configured to determine that the palm of the virtual hand of the user in the virtual reality scene is facing upward, which specifically includes: a normal line of the palm constructing unit, configured to construct a normal line of the palm perpendicular to the palm plane by taking the palm center position of the virtual hand as a starting point; and a palm facing upward determination unit, configured to determine that the palm of the virtual hand in the virtual device faces upward if the angle between the normal line of the palm and the Y axis of the world coordinate of the virtual reality scene is less than a predetermined threshold.

In embodiments of the present disclosure, the apparatus further includes: an action state determining module configured to determine that the action state of the virtual hand changes from the pinching state to the releasing state, which specifically includes: a first distance obtaining unit, configured to obtain a first distance between the distal segment of the virtual thumb and the distal segment of the virtual index finger of the virtual hand in real time, where the distal segment is a finger joint on the finger farthest from the palm; and an action state determining unit configured to, when the first distance is transformed from a first range to a second range, determining that the action state of the virtual hand changes from the pinching state to the releasing state, where the first range is less than the second range.

In embodiments of the present disclosure, the first distance obtaining unit is specifically configured to bind a first three-dimensional ball at the distal segment of the virtual thumb; a second three-dimensional ball at the distal segment of the virtual index finger; and determine the distance between the first three-dimensional ball center and the second three-dimensional ball center as the first distance between the distal segment of the virtual large thumb and the distal segment of the virtual index finger of the virtual hand.

In embodiments of the present disclosure, the apparatus includes: an action state determining module configured to determine that the action state of the virtual hand changes from the pinching state to the releasing state, which specifically includes: a second distance obtaining unit configured to obtain a second distance between the fingertips of five fingers of the virtual hand in real time; and an action state determining unit configured to, when the second distance is transformed from a third range to a fourth range, determine that the action state of the virtual hand is changed from the pinching state to the releasing state, where the third range is less than the fourth range.

In an embodiment of the present disclosure, the predetermined operation includes: returning to a system homepage, invoking a function menu, or invoking a task management page.

The apparatus for interaction provided by this embodiment of the present disclosure may perform the steps performed in the method for interaction provided in the method embodiments of the present disclosure, and the execution steps and beneficial effects are not elaborated herein.

The method for interaction provided by embodiments of the present application is described in detail below with reference to the accompanying drawings.

FIG. 4A is a flowchart of a method for interaction according to an embodiment of the present disclosure. This embodiment may be applied to a case of human-computer interaction in virtual reality or augmented reality and the method may be performed by an apparatus for interaction. The apparatus for interaction may be implemented in software and / or hardware, and the apparatus for interaction may be configured in a virtual reality (VR) device, an augmented reality (AR) device, or a mixed reality (MR) device.

As shown in FIG. 4A, the interaction method provided by the embodiment of the present disclosure mainly includes the following steps:
S4101: whether a palm is in a state where five fingers are closed together and straight is detected.

The device for detecting the state information of the palm may be any one or more of a VR device, an AR device, and a MR device. The type of the virtual device is not specifically limited in this embodiment. Alternatively, the device for detecting the state information of the palm is a head-mounted virtual device.

The palm may refer to the virtual hand displayed in the virtual device, and the position information and the action of the virtual hand are determined by the biological hand associated with the virtual hand. That is, the user's biological hand performs an action, and the virtual hand performs the same action based on the action gesture of the biological hand.

The palm includes a wrist and 5 fingers. The position information of the virtual fingertip includes position information of 5 virtual fingertips. The position information may include coordinate information which may be represented by world coordinates, or may be represented by custom model coordinates, and the representation manner of the position information is not limited in this embodiment. It should be noted that the position information in this embodiment is described by using the world coordinate representation as an example.

The palm state may be understood as an action performed by the palm of the user in the virtual device. The palm state can be obtained in the following manner. A sensor emits modulated near-infrared light which is reflected after encountering an object, and the sensor calculates the distance of the photographed object by calculating a time difference or a phase difference between light emission and a reflection, that is, the palm state is generated.

In this embodiment, the palm state may be obtained in real time by a device such as a sensor, a camera and the like on the virtual device. Specifically, the position information between the palm and the virtual device sensor is first obtained through the camera, then the real position of the palm is derived based on the real position of the known sensor, and the position of the palm is mapped to the virtual space, so that the spatial coordinates of the palm and the spatial coordinates of the finger are obtained, and then the virtual palm is formed in the virtual space.

In a possible implementation, detecting whether the palm is in the state where five fingers are closed together and straight includes: calculating a first distance between each fingertip of the palm; calculating a second distance between each fingertip of the palm and the palm center; and determining whether the palm is in the state where five fingers are closed together and straight based on the first distance and the second distance.

The first distance between each fingertip includes at least a distance between two adjacent fingertips. Specifically, the first distance between each fingertip includes a first distance between the thumb tip and the index finger tip, a first distance between the index finger tip and the middle finger tip, a first distance between the middle finger tip and ring finger tip, a first distance between the ring finger tip and the little finger tip. The second distance between each fingertip of the palm and the palm center may include: a second distance between the thumb tip of the palm and the palm center, a second distance between the index finger tip of the palm and the palm center, a second distance between the middle finger tip of the palm and the palm center, a second distance between the ring finger tip of the palm and the palm center, and a second distance between the little finger tip of the palm and the palm center.

In one embodiment of the present disclosure, the first distance between each fingertip is calculated according to the position information of each fingertip. The second distance between each fingertip and the palm is calculated according to the position information of each fingertip and the position information of the palm. Specifically, the position information in the embodiments of the present disclosure may be represented by world coordinates, and the distance information is obtained based on the distance calculation formula of the fingertip of the two coordinate points. The distance calculation formula is not specifically limited in embodiments of the present disclosure.

In one embodiment of the present disclosure, the fingertip ball is bound on each fingertip based on the position information of each fingertip and the palm ball is bound on the palm on the position information of the palm. The distance between each fingertip ball is calculated as the first distance. The distance between each fingertip ball and the palm ball is calculated as the second distance.

In a possible implementation, the palm is in the state where five fingers are closed together and straight including: the first distance is less than a first distance threshold, and the second distance is greater than a second distance threshold, then it is determined that the palm is in the state where five fingers are closed together and straight.

In this embodiment, the first distance is less than the first distance threshold, which indicates that the distance between the index finger tip, the middle finger tip, the ring finger tip, and the little finger tip is very close, and the distance between the thumb tip and the index finger tip is moderate. The second distance is greater than the second distance threshold which indicates that the distance between the five fingertips and the palm center is relatively far, and then it is determined that the palm is in t the state where five fingers are closed together and straight.

For example, the first distance corresponds to the distance between the index finger tip and the middle finger tip. The distance from the index finger tip to the ring finger tip in a palm state where fingers are closed together is about 1 centimeter and the distance from the thumb tip to the index finger tip is about 6 centimeters when the palm is open. Considering that the size of the palm of different persons is different, and it is assumed that the first distance threshold is set to 3 centimeters, the method in this embodiment can correctly identify whether the virtual index finger and the virtual middle finger are closed. The second distance corresponds to the distance between the middle finger tip and the palm center, the distance from the middle finger tip to the palm center in a palm state where fingers are closed together is about 15 centimeters. The distance between the middle finger tip and the palm center is very close when fingers are clenched, the influence caused by different palm sizes is also considered, and the second distance threshold is assumed to be set to be 12 centimeters. The second distance threshold is satisfied in a state where fingers are straight in the embodiment of the present disclosure. Similarly, whether other fingers are in a state where other fingers are closed together and straight may be verified.

When the first distance is greater than the first distance threshold, it indicates that the distance between the fingertip and the fingertip is relatively far. When the second distance is greater than the second distance threshold, it indicates that the distance between the fingertip and the palm is relatively close, then it is determined that the state where five fingers are closed together and straight is not satisfied at this time. For example, when the hand is in the clenched state, the first distance is still 1 centimeter, which is no different from the hand extended state. However, the second distance is only 2 centimeters, which is much smaller than the second distance threshold, so the condition where five fingers are closed together and straight is not satisfied.

In this embodiment, by determining the distance between the fingertips of the finger, the fingertips and the palm center, the degree of convergence and extension of the fingers can be determined to recognize whether the whole hand is in the state where five fingers are closed together and straight. The positioning stability of the virtual hand is improved, the accuracy requirement is reduced, and the immersive experience of the user is further improved.

S4102: in response to the palm being in the state where five fingers are closed together and straight, whether the palm is within a predetermined range is determined.

The predetermined range refers to a specific range of gesture sensing. Due to the influence of sensors such as radar and depth cameras, as well as factors such as anti-interference, and the virtual gesture sensing needs to have a certain predetermined range, within which a change of the gesture can be sensed, and cannot be sensed beyond the predetermined range.

As shown in FIG. 4B, a normal line of the palm is constructed at a palm center position and predetermined circle is drawn with a predetermined circle center and a predetermined radius. If the normal line of the palm intersects with the predetermined circle, and the gesture keeps the state where five fingers are together and straight, a condition for triggering a human-computer interaction operation is met.

In a possible implementation, determining whether the palm is within the predetermined range includes: constructing a normal line of the palm perpendicular to the palm plane by taking the palm center position of the virtual hand as a starting point; drawing a circle with a predetermined circle center and a predetermined radius in a predetermined plane; and determining whether the palm is within the predetermined range based on a position relationship between the normal line of the palm and the circle.

The normal line of the palm takes the center of the palm as the starting point of the ray and emits towards the palm direction, that is, the Y direction of the space is taken as the direction of the ray, perpendicular to the palm center. As shown in FIG. 4B, the palm normal is emitted to the inside of the page by taking the palm center as the starting point. In the predetermined plane, a circle is drawn according to a predetermined circle center position and a circle center radius, for example, the predetermined radius is 0.2 meter, and the circle shown in FIG. 4B is the predetermined circle. The normal line of the palm passes through the predetermined circle, and the corresponding gesture is kept, so that the palm is determined to be within the predetermined range.

In a possible implementation, drawing the circle with the predetermined circle center and the predetermined radius in the predetermined plane includes: constructing a first plane at a position with a first predetermined length from a ground plane; constructing a second plane at a position with a second predetermined length from a plane where the face of the user is located; constructing a third plane perpendicular to the first plane and the second plane by taking a central axis of the user body as a reference line; determining an intersection point of the first plane, the second plane and the third plane as a circle center; and drawing the circle with a predetermined circle center and the predetermined radius in the second plane.

The first plane is a plane with a first predetermined length from the ground plane, the plane is parallel to the ground plane, and the ground plane is a plane on which the user's foot is stepped. The first predetermined length may be set according to the height of the person, and alternatively, the first predetermined length is 150 centimeters.

The plane where the user's face is located is the plane where user's face is located, and the plane may be determined according to the user's forehead position, or may be determined by the user's eye position, or may be determined according to the plane where the head-mounted VR device is located. The second predetermined length may be determined according to the distance between the palm and the elbow of the user. Alternatively, the second predetermined length is 50 centimeters. That is, the second plane is a plane 50 centimeters away from the plane of the user's face and perpendicular to the first plane.

The central axis of the user's body may be the central axis between the two eyes of the user, or may be the central axis between the two ears of the user.

In this embodiment, the circle center is drawn on the second plane by taking the intersection of the three planes as the circle center.

Specifically, the normal line of the palm is a ray, the predetermined circle is a circular surface, and the normal line of the palm can pass through a predetermined circle, that is, the palm is in the predetermined range. As shown in FIG. 4B, if the normal line of the palm passes vertically through the predetermined circle, the predetermined range is met. Or, the normal line of the palm and the circular surface of the distal circle have an inclination angle of 30 degrees, but still pass through the predetermined circle, even though the normal line of the palm does not pass vertically through the predetermined circle, but still falls within the predetermined range and still meets the requirement. In this way, the palm may be in front of the user's line of sight.

S4103: in response to the palm being within the predetermined range, a human-computer interaction operation is triggered.

Embodiments of the present disclosure provide a method for human-computer interaction, which includes: determining whether a palm is in a state where five fingers are closed together and straight based on the position information of a fingertip ball and a palm ball in the virtual device; determining whether the normal line of the palm passes through a predetermined circular range, that is, determining whether the back of the palm is in front of the sight of the user; and triggering the related operations of human-computer interaction after the two conditions are met.

In a possible implementation, in response to the palm being within the predetermined range, triggering a human-computer interaction operation includes: triggering the human-computer interaction operation if the palm is within the predetermined range and the duration of the palm is in the state where five fingers are closed together and straight exceeds a predetermined duration.

The predetermined duration may be set manually, for example, the duration is set to 1 second. If the palm is within the predetermined range and the gesture keeps the state where five fingers are closed together and straight for more than 1 second, the interaction operation is triggered.

In this embodiment, triggering the human-computer interaction operation may be triggering a calibration function of the virtual device.

The present disclosure relates to the method for interaction, which includes: detecting whether a palm is in a state where five fingers are closed together and straight; in response to the palm being in a state where five fingers are closed together and straight, determining whether the palm is within a predetermined range; and in response to the palm being within the predetermined range, triggering a human-computer interaction operation. According to the embodiment of the present disclosure, when the palm is in the state where five fingers are closed together and straight, and the palm is within the specified range, the human-computer interaction operation is triggered, which solves the problem of interaction between biological hands and virtual objects.

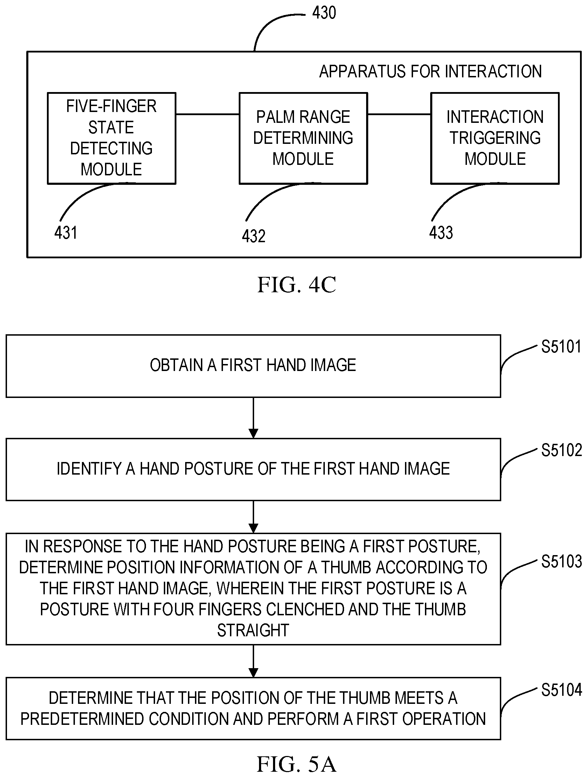

FIG. 4C is a schematic structural diagram of an apparatus for interaction according to an embodiment of the present disclosure. This embodiment may be applied to a case of human-computer interaction in virtual reality or augmented reality, and the apparatus for interaction may be implemented in software and / or hardware. The apparatus for interaction may be configured in a virtual reality (VR) device, an augmented reality (AR) device, or a mixed reality (MR) device.

As shown in FIG. 4C, the apparatus for interaction 430 provided by embodiments of the present disclosure mainly includes a five-finger state detecting module 431, a palm range determining module 432, and an interaction triggering module 433.

The five-finger state detecting module 431 is configured to detect whether a palm is in a state where five fingers are closed together and straight.

The palm range determining module 432 is configured to, in response to the palm being in a state where five fingers are closed together and straight, determine whether the palm is within a predetermined range.

The interaction triggering module 433 is configured, in response to the palm being within the predetermined range, trigger a human-computer interaction operation.

In a possible implementation, the interaction triggering module 433 is specifically configured to trigger the human-computer interaction operation if the palm is within the predetermined range and the duration of the palm is in the state where five fingers are closed together and straight exceeds a predetermined duration.

In a possible implementation, the five-finger state detecting module 431 includes:
a first distance measuring unit configured to calculate a first distance between each fingertip of the palm;
a second distance measuring unit configured to calculate a second distance between each fingertip of the palm and the palm center; and
a five-finger state detecting unit configured to determine whether the palm is in the state where five fingers are closed together and straight based on the first distance and the second distance.

In a possible implementation, the five-finger state detecting unit is specifically configured to, in response to the first distance being less than the first distance threshold and the second distance being greater than the second distance threshold, determine whether the palm is in the state where five fingers are closed together and straight.

In a possible implementation, the palm range determining module 432 includes:
a normal line of the palm constructing unit configured to construct a normal line of the palm perpendicular to the palm plane by taking the palm center position of the virtual hand as a starting point;
a circle drawing unit configured to draw a circle with a predetermined circle center and a predetermined radius in a predetermined plane; and
a palm range determining unit configured to determine that the palm is within the predetermined range if the normal line of the palm intersects with the circle.

In a possible implementation, the circular drawing unit is specifically configured to construct a first plane at a position with a first predetermined length from a ground plane; construct a second plane at a position with a second predetermined length from a plane where the face of the user is located; construct a third plane perpendicular to the first plane and the second plane by taking a central axis of the user body as a reference line; determine an intersection point of the first plane, the second plane and the third plane as a circle center; and draw the circle with a predetermined circle center and the predetermined radius in the second plane.

The apparatus for interaction provided by this embodiment of the present disclosure may perform the steps performed in the method for interaction provided in the method embodiments of the present disclosure, and the execution steps and beneficial effects are not elaborated herein.

The method for gesture control provided by embodiments of the present application is described in detail below with reference to the accompanying drawings.

FIG. 5A is a flowchart of a method for gesture control according to an embodiment of the present disclosure. This embodiment may be applied to a case of human-computer interaction in virtual reality or augmented reality and the method may be performed by an apparatus for gesture control. The apparatus for gesture control may be implemented in software and / or hardware, and the apparatus for gesture control may be configured in a virtual reality (VR) device, an augmented reality (AR) device, or a mixed reality (MR) device.

As shown in FIG. 5A, the method for gesture control provided by embodiments of the present disclosure mainly includes the following steps:
S5101: a first hand image is obtained.

The device for obtaining the first hand image may be any one or more of a VR device, an AR device, and a MR device. The type of the virtual device is not specifically limited in this embodiment. Alternatively, the device for detecting the state information of the palm is a head-mounted virtual device.

The hand image may refer to a virtual hand image displayed in the virtual device, and the position information and the action of the virtual hand are determined by the biological hand associated with the virtual hand image. Specifically, the depth information of the biological hand is obtained in real time through a sensor and a depth camera on the virtual device, wherein the biological hand refers to a real user' s palm in the real world. Specifically, the positional relationship between the biological hand and the sensor in the virtual device, real position of the sensor and virtual coordinate of the sensor are first obtained through the depth camera, and the real position of the palm of the biological hand is calculated according to the real position of the sensor. Then, the real position of the palm and the real position of the fingertip may be mapped into the virtual space based on the known virtual coordinate of the sensor, so that the spatial coordinate of the palm and the spatial coordinate of the fingertip are obtained. Because the positional relationship (hand joint information) between the joints of the biological hand is known, the coordinate of each joint of the hand in the virtual space can be calculated according to the spatial coordinate of the palm and the spatial coordinate of the fingertip, thereby filling to generate a virtual hand and obtaining the spatial coordinates of the whole virtual hand in the VR system.

S5102: a hand posture of the first hand image is identified.

The hand posture refers to an action performed by the palm in the first hand image, or a posture maintained by the palm. For example, the first posture in the embodiments of the present disclosure is a posture in which four fingers make a fist and the thumb is straight.

In an implementation of the present disclosure, identifying the hand posture of the first hand image includes: identifying a thumb tip, an index finger tip, a middle finger tip, a ring finger tip, a little finger tip, and a palm center in the first hand image; determining distances between the thumb tip, the index finger tip, the middle finger tip, the ring finger tip, the little finger tip and the palm center.

In an implementation of the present disclosure, identifying the hand posture of the first hand image further includes: in response to the distances between the index finger tip, the middle finger tip, the ring finger tip, the little finger tip and the palm center are all less than a first distance threshold, and the distance between the thumb tip and the palm center is greater than the second distance threshold, determining that the hand posture is the first posture.

Further, whether the palm is in the state where four fingers make a fist and the thumb is straight is determined according to the spatial coordinates of the virtual hand in the VR system.

The first distance threshold is used for deciding whether the four fingers are making a fist. In a normal clenched state of the palm, the distances between the index finger tip, the middle finger tip, the ring finger tip, the little finger tip and the palm center are very close, considering that the sizes of the palm of different user are different, a certain margin should be set in the first distance threshold, for example, the first distance threshold is set as 2 centimeters. That is, the requirement is met if the distance between the index finger tip and the palm center, the distance between the middle finger tip and the palm center, the distance between the ring finger tip and the palm center, and the distance between the little finger tip and the palm center of the finger are all less than 2 cm, and the relationship between the four distances is a logical "AND" relationship. After the distances between the four fingertips and the palm center is less than the first distance threshold, it is necessary to determine whether the distance between the thumb tip and the palm center is greater than the second distance threshold. When the thumb is in a straight state, the distance between the thumb tip and the palm center is relatively far, considering that the sizes of the palm of different user are different, and the setting of the second distance should not be too large or too small, otherwise it is possible to influence the decision. For example, the second distance threshold is set to be 8 centimeters.

Four fingers of the user keep a state where four fingers make a fist. The distances between four fingertips i.e., the index finger tip, the middle finger tip, the ring finger tip, the little finger tip and the palm center are all less than the set first distance threshold 2 centimeters, and the requirement of four fingers making a fist is met. The distance between the thumb tip and the palm center is 10 centimeters, it is assumed that the second distance threshold is set to 8 centimeters, and the distance between the thumb tip and the palm center is greater than the second distance threshold, then it is determined that the thumb is in the straight state.

The distances between the thumb tip, the index finger tip, the middle finger tip, the ring finger tip, the little finger tip and the palm center represents the bending degree of the finger, and then whether the palm has a fist holding action is detected. Through the decision manner of the distances between fingertips and the palm center, the problem of high precision requirements for traditional bare hand operations is solved, the positioning accuracy of the virtual hand is improved, the accuracy requirement is reduced, and the immersive experience of the user is further improved.

In a possible implementation, detecting that the palm is in the state where four fingers make a fist includes: binding an index finger fingertip ball on the index finger based on the position information of the index finger tip; binding a middle finger fingertip ball on the middle finger based on the position information of the middle finger tip; binding the ring finger fingertip ball on the ring finger based on the position information of the ring finger tip; binding the little finger fingertip ball on the little finger based on the position information of the little finger tip; binding a palm center ball on the palm center based on the position information of the palm center. If the middle finger fingertip ball, the ring finger fingertip ball and the little finger fingertip ball are tangent to or intersected with the palm ball, it is detected that the palm is in the state where four fingers make a fist.

The fingertip ball refers to a spherical model bound on the position information of the fingertip, and the palm ball refers to a spherical model bound on the position information of the palm, where the diameter of the palm ball is greater than the diameter of the fingertip ball.

Further, binding the middle finger fingertip ball on the virtual middle finger based on the position information of the virtual middle finger tip includes: binding the middle finger fingertip ball on world coordinates corresponding to the virtual middle finger tip. For example, the center coordinate of the middle finger fingertip ball may be set to the world coordinate corresponding to the virtual middle finger tip, or the middle finger tip ball may be set at a position tangent to the virtual middle finger tip. The palm ball always moves with the movement of the position information of the palm, and the fingertip ball always moves with the movement of the position information of the fingertip.

In this embodiment, the middle finger fingertip ball, the ring finger fingertip ball, and the little finger fingertip ball are tangent to or intersect with the palm ball, indicating that the middle finger, the ring finger and the little finger are bent and close to the palm center. At this time, it is determined that the palm is detected to be in the state where four fingers make a fist.

If any fingertip ball of the middle finger fingertip ball, the ring finger fingertip ball, and the little finger fingertip ball and the palm center ball are in a separated state, it indicates that there is a small bending degree for one finger. At this time, it is determined that the palm is not in the state where four fingers make a fist.

In the embodiment, the distance between the fingertip and the palm center may be decided by determining the positional relationship between the palm ball and the fingertip ball, so that the bending degree of the finger is decided to distinguish whether the whole hand has a fist making action or not. The problem that the operation precision requirement of the traditional bare hand is high is solved by the approach of determining the state of the hand through binding a ball, the positioning stability of the virtual hand is improved, the accuracy requirement is reduced, and the immersive experience of the user is further improved.

S5103: in response to the hand posture being a first posture, position information of a thumb is determined according to the first hand image, wherein the first posture is a posture with four fingers clenched and the thumb straight.

The position information of the thumb may include the position information of the thumb tip, and the normal line of the thumb is constructed through the position of the thumb tip and the position of the palm center.

Specifically, the normal line of the thumb takes the center of the palm as the starting point of the ray and extends towards the thumb tip, that is, the thumb in the space coordinate points to the direction of the ray. The normal line of the thumb is emitted from the palm center towards the direction of the thumb, and the establishment of the normal line of the thumb provides support for subsequent operations.

S5104: the position of the thumb meeting a predetermined condition is determined and a first operation is performed.

Specifically, the predetermined condition may be met if the thumb is within a set range centered on the mouth. A palm gesture may be detected by a detecting device within the predetermined range, the position and the gesture of the palm may be detected by detecting the five fingertips of the palm and the palm center. If the palm is not within the predetermined range, detection may not be performed, and the next operation may not be performed. The present disclosure does not further limit the predetermined range, it can be set in front of the face with the mouth as the center, and larger or smaller preset ranges can be set according to needs.

In a possible implementation, determining that the position of the thumb meets the predetermined condition includes: setting a collision zone at the head position of the user in advance; constructing a ray in the direction of the thumb tip in a straight state; and determining that the predetermined condition is met when the ray intersects the collision zone.

The collision zone may be set in a plane where the forehead of the user is located; or may be set in a plane where the glasses of the wearable device are located.

Further, the process of constructing the normal line of the thumb includes: constructing a thumb ray with a palm center position as a starting point and a thumb tip direction as a ray direction.

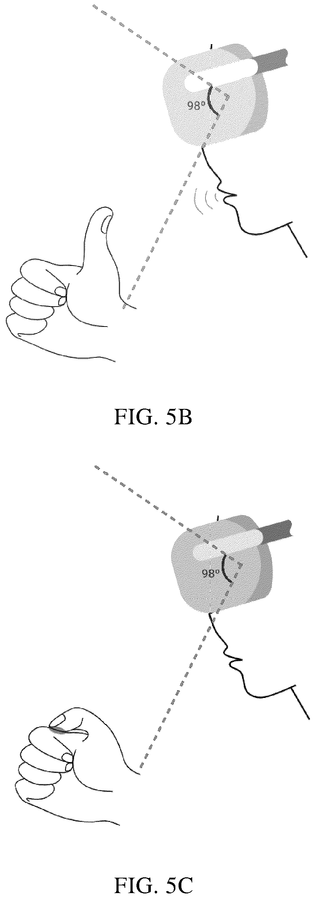

Specifically, when the thumb ray intersects with the plane of the collision zone, the predetermined condition is successfully met. As shown in FIG. 5B, the ray passes through the collision zone at an angle from the fingertip of the big thumb. It should be noted that the normal line of the thumb is a ray, the predetermined collision zone is a circular surface. The normal line of the thumb can pass through the collision zone, that is, the thumb is in the predetermined range. There is an inclination angle between the normal line of the thumb and the circular surface of the collision zone, but the normal line of the thumb still pass through the collision zone. Even if it does not pass vertically, it still remains within the predetermined range and meets the requirements.

The first operation user may be set by himself or herself, the first operation in the embodiments of the present disclosure is a voice input, and the user may also set other functions, which is not specifically limited in the present disclosure.

In a possible implementation, performing the first operation includes: turning on a microphone; and collecting an audio signal through the microphone.

Specifically, as shown in FIG. 5B, when the index finger, the middle finger, the ring finger and the little finger make the fist and the thumb is straight, and the thumb ray intersects the collision area, the microphone is turned on, and the sound signal of the user is collected. At this time, the wearable device turns on the voice input function, and the microphone is turned on, audio is collected, and the like.

In a possible implementation, in the process of performing the first operation, the method further includes: obtaining a second hand image in a predetermined period; determining a positional relationship between the thumb and the index finger according to the second hand image; and performing a second operation when it is determined that the positional relationship between the thumb and the index finger is that the thumb is in contact with the index finger.

The predetermined period may be set according to actual conditions, usually a few milliseconds or a few seconds, which is not specifically limited in this embodiment.

Specifically, the position change determination between the thumb and the index finger is determined by the distance between the thumb tip and the index finger tip. A third distance threshold is set, and if the distance between the thumb tip and the index finger tip is less than the third distance threshold, it is determined that the thumb is in contact with the index finger, and the second operation is performed. It is assumed that the third distance threshold is set to be 1 centimeter, as shown in FIG. 5B, the distance between the thumb tip and index finger tip is far, which is far beyond the third distance threshold, and the second operation is not performed. As shown in FIG. 5C, the distance between the thumb tip and the index finger tip is less than 2 centimeters, which is less than the third distance threshold, and the second operation is performed.

Further, the thumb fingertip ball is bound on the position of the thumb tip, and the index finger cube is bound on the position of the virtual index finger. Moreover, the thumb fingertip ball always moves with the movement of the position information of the virtual thumb. The index finger cube may be a rectangular prism, covering the index finger, and always moving with the movement of the position information of the virtual index finger.

In this embodiment, if the thumb fingertip ball is tangent to or intersects with the index finger cube, it indicates that the thumb is bent, the thumb tip is in contact with the index finger, and the second operation is triggered. If the thumb fingertip ball is not tangent to or does not intersect with the index finger cube, that is, in the separated state, the thumb tip is not in contact with the index finger, and at this time, the second operation is not triggered.

In the embodiment, the bending degree of the thumb is decided by determining the positional relationship between the thumb fingertip ball and the index finger cube, to distinguish whether the thumb is in contact with the index finger. This method of determining the state of the hand by binding a ball solves the problem of high precision requirements for traditional bare hand operations, improves the stability of virtual hand positioning, and reduces precision requirements, thereby enhancing the user's immersive experience.

In a possible implementation, performing the second operation includes: sending and / or storing the audio signal. The second operation may be sending the audio input by the first operation or saving the audio input by the first operation, which is not specifically limited in the embodiments of the present disclosure.

Specifically, in embodiments of the present disclosure, the first operation is a voice input, and the second operation is to end the voice input and perform a next operation on the audio, that is, sending or saving. The two operations complement each other, which solves the problem of virtual gesture interaction while enhancing user experience.

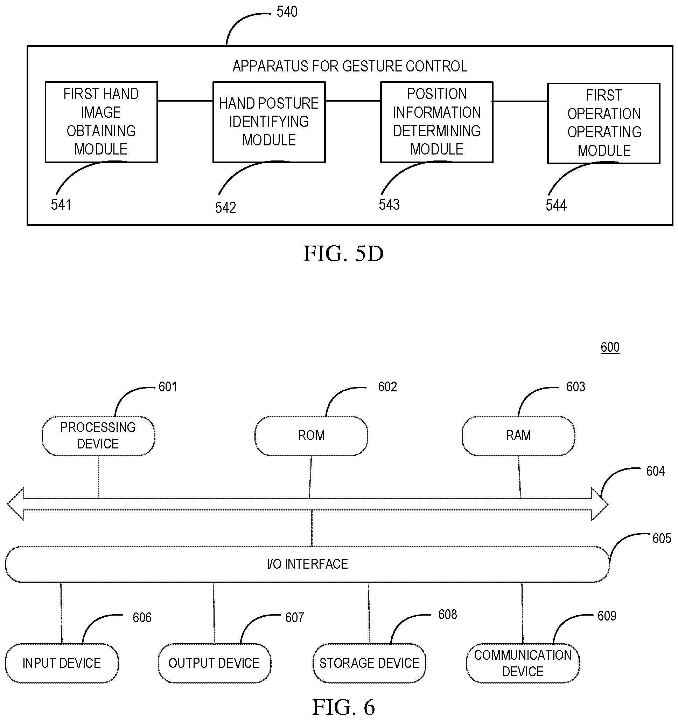

FIG. 5D is a schematic structural diagram of an apparatus for human-computer gesture control according to an embodiment of the present disclosure. This embodiment may be applied to a case of human-computer interaction in virtual reality or augmented reality, and the apparatus for gesture control may be implemented in software and / or hardware. The apparatus for gesture control may be configured in a virtual reality (VR) device, an augmented reality (AR) device, or a mixed reality (MR) device.

As shown in FIG. 5D, the apparatus for gesture control 540 provided by embodiments of the present disclosure mainly includes a first hand image obtaining module 541, a hand posture identifying module 542, a position information determining module 543, and a first operation performing module 544.

The first hand image obtaining module 541 is configured to obtain a first hand image.

The hand posture identifying module 542 is configured to identify a hand posture of the first hand image.

The position information determining module 543 is configured to, in response to the hand posture being a first posture, determine position information of a thumb according to the first hand image, wherein the first posture is a posture with four fingers clenched and the thumb straight.

The first operation performing module 544 is configured to determine that the position of the thumb meets a predetermined condition and perform a first operation.

In a possible implementation, the hand posture identifying module 542 includes: a fingertip and palm center identifying unit, configured to identify a thumb tip, an index finger tip, a middle finger tip, a ring finger tip, a little finger tip, and a palm center in the first hand image; and a distance determining unit configured to determine distances between the thumb tip, the index finger tip, the middle finger tip, the ring finger tip, the little finger tip and the palm center.

In a possible implementation, the hand posture identifying module 542 further includes: a first posture determining unit configured to, in response to the distances between the index finger tip, the middle finger tip, the ring finger tip, the little finger tip and the palm center are all less than a first distance threshold, and the distance between the thumb tip and the palm center is greater than the second distance threshold, determine that the hand posture is the first posture.

In a possible implementation, determining that the position of the thumb meets the predetermined condition includes: setting a collision zone at the head position of the user in advance; constructing a ray in the direction of the thumb tip in a straight state; and determining that the predetermined condition is met when the ray intersects the collision zone.

In a possible implementation, the first operation performing module 544 includes: a microphone turning unit configured to turn on the microphone; and an audio collection unit configured to collect an audio signal through the microphone.

In a possible implementation, the apparatus further includes: a second hand image obtaining module configured to obtain a second hand image in a predetermined period in a process of performing the first operation; a finger positional relationship obtaining module configured to determine a positional relationship between the thumb and the index finger according to the second hand image; and a second operation performing module configured to perform a second operation when it is determined that the positional relationship between the thumb and the index finger is that the thumb is in contact with the index finger.

In a possible implementation, the second operation performing module is specifically configured to send and / or store the audio signal.

The apparatus for gesture control provided by this embodiment of the present disclosure may perform the steps performed in the method for gesture control provided in the method embodiments of the present disclosure, and the execution steps and beneficial effects are not elaborated herein.

FIG. 6 is a schematic structural diagram of an electronic device according to an embodiment of the present disclosure. References are specifically made to FIG. 6 below, which illustrates a schematic structural diagram of an electronic device 600 suitable for implementing the embodiments of the present disclosure. The electronic device 600 in the embodiments of the present disclosure may include, but is not limited to, a mobile terminal such as a mobile phone, a laptop computer, a digital broadcast receiver, a PDA (personal digital assistant), a PAD (tablet computer), a PMP (portable multimedia player), an in-vehicle terminal (for example, an in-vehicle navigation terminal), a wearable terminal device, and the like, and a fixed terminal such as a digital TV, a desktop computer, a smart home device, or the like. The terminal device shown in FIG. 6 is merely an example and should not impose any limitation on the functions and use ranges of the embodiments of the present disclosure.

As shown in FIG. 6, the electronic device 600 may include a processing device (for example, a central processing unit, a graphics processor, etc. ) 601, which may perform various appropriate actions and processing according to a program stored in a read-only memory (ROM) 602 or a program loaded into a random access memory (RAM) 603 from a storage device 608 to implement the method according to the embodiments of the present disclosure. In the RAM 603, various programs and data required by the operation of the terminal device 600 are also stored. The processing device 601, the ROM 602, and the RAM 603 are connected to each other through a bus 604. Input / output (I/O) interface 605 is also connected to bus 604.

Generally, the following devices may be connected to the I/O interface 605: an input device 606 including, for example, a touch screen, a touchpad, a keyboard, a mouse, a camera, a microphone, an accelerometer, a gyroscope, etc.; an output device 607 including, for example, a liquid crystal display (LCD), a speaker, a vibrator, etc.; a storage device 608 including, for example, a magnetic tape, a hard disk, etc.; and a communication device 609. The communication device 609 may allow the terminal device 600 to communicate wirelessly or wired with other devices to exchange data. Although FIG. 6 illustrates a terminal device 600 having various devices, it should be understood that all illustrated devices are not required to be implemented or provided. More or fewer devices may alternatively be implemented or provided.

In particular, according to embodiments of the present disclosure, the process described above with reference to the flowchart may be implemented as a computer software program. For example, embodiments of the present disclosure include a computer program product comprising a computer program embodied on a non-transitory computer readable medium, the computer program comprising program code for performing the method shown in the flowchart to implement the method for determining a virtual cursor in a virtual reality scene as described above. In such embodiments, the computer program may be downloaded and installed from the network through the communication device 609, or installed from the storage device 608, or from the ROM 602. When the computer program is executed by the processing apparatus 601, the foregoing functions defined in the method of the embodiments of the present disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, radio frequency (RF), and the like, or any suitable combination of the foregoing.

In some implementations, the client, server may communicate using any currently known or future developed network protocol, such as HTTP (HyperText Transfer Protocol), and may be interconnected with any form or medium of digital data communication (e.g., a communication network). Examples of communication networks include local area networks ("LAN"), wide area networks ( "WANs"), Internet (e.g., the Internet), and peer-to-peer networks (e.g., ad hoc peer-to-peer networks), as well as any currently known or future developed networks.

The computer-readable medium described above may be included in the electronic device; or may be separately present without being assembled into the electronic device.

In some embodiments, the foregoing computer-readable medium carries one or more programs, and when the one or more programs are executed by the terminal device, the terminal device is caused to: determine position information of a virtual human body of a user in the virtual reality scene, wherein the position information comprises a wrist position and a waist position; determine a virtual ray based on the position information, wherein a starting point of the virtual ray is determined based on the wrist position, and a direction of the virtual ray is determined based on the waist position and the wrist position; and determine the virtual cursor based on an intersection of the virtual ray and a virtual object in the virtual reality scene.

In some embodiments, the foregoing computer-readable medium carries one or more programs, and when the one or more programs are executed by the terminal device, the terminal device is caused to: determine a target object based on a fingertip direction of a virtual index finger of a virtual hand of a user in a virtual reality scene; determine whether a virtual thumb and a virtual middle finger of the virtual hand are in a pinching state, wherein the pinching state is that the virtual thumb is in contact with the virtual middle finger; and in response to the virtual thumb and the virtual middle finger being in a pinching state, determine that the target object is in a selected state.

In some embodiments, the foregoing computer-readable medium carries one or more programs, and when the one or more programs are executed by the terminal device, the terminal device is caused to: when it is determined that a palm of a virtual hand of a user in a virtual reality scene being facing upward, obtain an action state of a virtual hand; and when it is determined that the action state of the virtual hand is changed from a pinching state to a releasing state, perform a predetermined operation, wherein the pinching state is a state where the five fingers of the virtual hand are together and fingertips are in contact, and the releasing state is a state where the five fingers of the virtual hand are stretched and separated.

In some embodiments, the foregoing computer-readable medium carries one or more programs, and when the one or more programs are executed by the terminal device, the terminal device is caused to: detect whether a palm is in a state where five fingers are closed together and straight; in response to the palm being in a state where five fingers are closed together and straight, determine whether the palm is within a predetermined range; and in response to the palm being within the predetermined range, trigger a human-computer interaction operation.

In some embodiments, the foregoing computer readable medium carries one or more programs, and when the one or more programs are executed by the terminal device, the terminal device is caused to: obtain a first hand image; identify a hand posture of the first hand image; in response to the hand posture being a first posture, determine position information of a thumb according to the first hand image, wherein the first posture is a posture with four fingers clenched and the thumb straight; and determine that the position of the thumb meets a predetermined condition and perform a first operation.

Alternatively, when the one or more programs are executed by the terminal device, the terminal device may further perform other steps described in the foregoing embodiments.

Computer program code for performing the operations of the present disclosure may be written in one or more programming languages, including, but not limited to, object oriented programming languages such as Java, Smalltalk, C++, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

The flowcharts and block diagrams in the drawings illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and / or flowcharts, as well as combinations of blocks in the block diagrams and / or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. The name of the unit does not constitute a limitation on the unit itself in some cases.

The functions described above may be performed, at least in part, by one or more hardware logic components. For example, without limitation, exemplary types of hardware logic components that may be used include: field programmable gate arrays (FPGA), application specific integrated circuits (ASIC), application specific standard products (ASSP), system-on-a-chip (SOC), complex programmable logic devices (CPLD), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination of the foregoing. More specific examples of machine-readable storage medium may include electrical connections based on one or more lines, portable computer disks, hard disks, random access memory (RAM), read-only memory (ROM), erasable programmable read-only memory (EPROM or flash memory), optical fibers, portable compact disc read-only memory (CD-ROM), optical storage devices, magnetic storage devices, or any suitable combination of the foregoing.

According to one or more embodiments of the present disclosure, the present disclosure provides a method for determining a virtual cursor in a virtual reality scene, including: determining position information of a virtual human body of a user in the virtual reality scene, wherein the position information comprises a wrist position and a waist position; determining a virtual ray based on the position information, wherein a starting point of the virtual ray is determined based on the wrist position, and a direction of the virtual ray is determined based on the waist position and the wrist position; and determining the virtual cursor based on an intersection of the virtual ray and a virtual object in the virtual reality scene.

According to one or more embodiments of the present disclosure, the present disclosure provides a method for determining a virtual cursor in a virtual reality scene, wherein determining the virtual ray based on the position information comprises: obtaining positioning information and gesture recognition information of a virtual reality device, and determining the waist position and the wrist position based on the positioning information and the gesture recognition information; and determining the virtual ray with the wrist position as the starting point and based on an extending direction of the waist position and the wrist position.

According to one or more embodiments of the present disclosure, the present disclosure provides a method for determining a virtual cursor in a virtual reality scene, wherein the direction of the virtual ray changes with a direction change of a line segment between the waist position and the wrist position.

According to one or more embodiments of the present disclosure, the present disclosure provides a method for determining a virtual cursor in a virtual reality scene, wherein a degree of freedom of the waist position on the X-axis is consistent with the degree of freedom of head position of the user on the X-axis; and the degree of freedom of the waist position on the Z-axis is consistent with the degree of freedom of the head position of the user on the Z-axis.

According to one or more embodiments of the present disclosure, the present disclosure provides a method for determining a virtual cursor in a virtual reality scene, further comprising: displaying the virtual ray and the virtual cursor in the virtual reality scene.

According to one or more embodiments of the present disclosure, the present disclosure provides a method for determining a virtual cursor in a virtual reality scene, further comprising: determining a visible ray, wherein the visible ray takes a predetermined part of the virtual human body as a starting point and a direction of the visible ray is determined by the direction of the virtual ray, and displaying the visible ray and the virtual cursor in the virtual reality scene.

According to one or more embodiments of the present disclosure, the present disclosure provides a method for determining a virtual cursor in a virtual reality scene, wherein the predetermined part of the virtual human body comprises at least one of: a fist, a thumb tip, an index finger tip, a middle finger tip, a ring finger tip, or a little finger tip.

According to one or more embodiments of the present disclosure, the present disclosure provides an apparatus for determining a virtual cursor in a virtual reality scene, including: a position information determining module configured to determine position information of a virtual human body of a user in the virtual reality scene, wherein the position information comprises a wrist position and a waist position; a virtual ray determining module configured to determine a virtual ray based on the position information, wherein a starting point of the virtual ray is determined based on the wrist position, and a direction of the virtual ray is determined based on the waist position and the wrist position; a virtual cursor determining module configured to determine the virtual cursor based on an intersection of the virtual ray and a virtual object in the virtual reality scene.

According to one or more embodiments of the present disclosure, the present disclosure provides an apparatus for determining a virtual cursor in a virtual reality scene, wherein the virtual ray constructing module includes: a human body position determining unit configured to obtain positioning information and gesture recognition information of a virtual reality device, and determine the waist position and the wrist position based on the positioning information and the gesture recognition information; and a virtual ray constructing unit configured to determine the virtual ray with the wrist position as the starting point and based on an extending direction of the waist position and the wrist position.

According to one or more embodiments of the present disclosure, the present disclosure provides an apparatus for determining a virtual cursor in a virtual reality scene, wherein the direction of the virtual ray changes with a direction change of a line segment between the waist position and the wrist position.

According to one or more embodiments of the present disclosure, the present disclosure provides an apparatus for determining a virtual cursor in a virtual reality scene, wherein a degree of freedom of the waist position on the X-axis is consistent with the degree of freedom of head position of the user on the X-axis; and the degree of freedom of the waist position on the Z-axis is consistent with the degree of freedom of the head position of the user on the Z-axis.

According to one or more embodiments of the present disclosure, the present disclosure provides an apparatus for determining a virtual cursor in a virtual reality scene, wherein the apparatus further includes: a display module configured to display the virtual ray and the virtual cursor in the virtual reality scene.

According to one or more embodiments of the present disclosure, the present disclosure provides an apparatus for determining a virtual cursor in a virtual reality scene, wherein the apparatus further includes: a visible ray constructing module configured to determine a visible ray, wherein the visible ray takes a predetermined part of the virtual human body as a starting point and a direction of the visible ray is determined by the direction of the virtual ray, and displaying the visible ray and the virtual cursor in the virtual reality scene.

According to one or more embodiments of the present disclosure, the present disclosure provides an apparatus for determining a virtual cursor in a virtual reality scene, wherein the predetermined part of the human body comprises at least one of: a fist, a thumb tip, an index finger tip, a middle finger tip, a ring finger tip, or a little finger tip.

According to one or more embodiments of the present disclosure, the present disclosure provides an electronic device, including:
one or more processors;
a memory configured to store one or more programs; and
the one or more programs, when executed by the one or more processors, causing the one or more processors to implement the method of determining a virtual cursor in a virtual reality scene according to any one of the present disclosure.

According to one or more embodiments of the present disclosure, the present disclosure provides a computer-readable storage medium having stored thereon a computer program, which when executed by a processor, implements the method of determining a virtual cursor in a virtual reality scene according to any one of the present disclosure.

Embodiments of the present disclosure further provide a computer program product, wherein the computer program product includes computer programs or instructions, and when the computer programs or the instructions are executed by a processor, implement the method of determining a virtual cursor in a virtual reality scene as described above.

According to one or more embodiments of the present disclosure, the present disclosure provides a method for interaction, including: determining a target object based on a fingertip direction of a virtual index finger of a virtual hand of a user in a virtual reality scene; determining that whether a virtual thumb and a virtual middle finger of the virtual hand are in a pinching state, wherein the pinching state is that the virtual thumb is in contact with the virtual middle finger; and in response to the virtual thumb and the virtual middle finger being in a pinching state, determining that the target object is in a selected state.

According to one or more embodiments of the present disclosure, the present disclosure provides a method for interaction, wherein determining the target object based on the fingertip direction of the virtual index finger of the virtual hand of the user in the virtual reality scene includes: emitting a target virtual ray by taking the virtual index finger tip as an endpoint; and determining the first virtual object that is in contact with the target virtual ray in the virtual reality scene as the target object.

According to one or more embodiments of the present disclosure, the present disclosure provides a method for interaction, wherein emitting the target virtual ray by taking the virtual index finger tip as the endpoint further includes: determining an initial virtual ray by taking the wrist of the virtual hand as the endpoint and taking an extension line between the designated part of the virtual human body and the wrist of the virtual hand in the virtual reality scene as the direction; and determining the target virtual ray based on the positional relationship between the wrist of the virtual hand and the fingertip of the virtual index finger, and the initial virtual ray.

According to one or more embodiments of the present disclosure, the present disclosure provides a method for interaction, wherein the method further includes: when it is detected that the virtual thumb and the virtual middle finger change from the pinching state to the releasing state, triggering a click operation instruction, where the release state is that the virtual thumb is not in contact with the virtual middle finger.

According to one or more embodiments of the present disclosure, the present disclosure provides a method for interaction, wherein the method further includes: when it is detected that the virtual index finger moves, triggering a drag operation instruction; in response to the drag operation instruction, obtaining movement information of the virtual index finger in real time; determining drag information of the target object based on the movement information of the virtual index finger; and controlling the target object to perform a movement operation corresponding to the drag information.

According to one or more embodiments of the present disclosure, the present disclosure provides a method for interaction, after controlling the target object to perform the drag operation corresponding to the drag information, the method further includes: controlling the target object to stop moving when it is detected that the virtual thumb and the virtual middle finger are in the releasing state.

According to one or more embodiments of the present disclosure, the present disclosure provides a method for interaction, wherein the method further includes: when it is detected that the virtual thumb tip slides on the virtual middle finger, triggering a sliding operation instruction; in response to the sliding operation instruction, obtaining sliding information of the virtual thumb tip on the virtual middle finger; and controlling the current page to perform a sliding operation based on the sliding information, where the current page is the page where the target object is located.

According to one or more embodiments of the present disclosure, the present disclosure provides a method for interaction, wherein obtaining the sliding information of the virtual thumb tip on the virtual middle finger includes: obtaining a start position and an end position of the virtual thumb tip on the virtual middle finger; and determining a difference between the end position and the start position as the sliding information.

According to one or more embodiments of the present disclosure, the present disclosure provides an apparatus for interaction, including: a target object determining module configured to determine a target object based on a fingertip direction of a virtual index finger of a virtual hand of a user in a virtual reality scene; a pinching state determining module configured to determine whether a virtual thumb and a virtual middle finger of the virtual hand are in a pinching state, wherein the pinching state is that the virtual thumb is in contact with the virtual middle finger; and a selected state determining module configured to, in response to the virtual thumb and the virtual middle finger being in a pinching state, determine that the target object is in a selected state.

According to one or more embodiments of the present disclosure, the present disclosure provides an apparatus for interaction, where the target object determining module includes: a target virtual ray emitting unit configured to emit a target virtual ray by taking the virtual index finger tip as an endpoint; and a target object determining unit configured to determine the first virtual object that is in contact with the target virtual ray in the virtual reality scene as the target object.

According to one or more embodiments of the present disclosure, the present disclosure provides an apparatus for interaction, wherein the target virtual ray emitting unit is specifically configured to determine an initial virtual ray by taking the wrist of the virtual hand as the endpoint and taking an extension line between the designated part of the virtual human body and the wrist of the virtual hand in the virtual reality scene as the direction; and determine the target virtual ray based on the positional relationship between the wrist of the virtual hand and the fingertip of the virtual index finger, and the initial virtual ray.

According to one or more embodiments of the present disclosure, the present disclosure provides an apparatus for interaction, and the apparatus further includes: a click operation module configured to, when it is detected that the virtual thumb and the virtual middle finger change from the pinching state to the releasing state, trigger a click operation instruction, where the release state is that the virtual thumb is not in contact with the virtual middle finger.

According to one or more embodiments of the present disclosure, the present disclosure provides an apparatus for interaction, wherein the apparatus further includes: a movement operation module configured to when it is detected that the virtual index finger moves, trigger a drag operation instruction; in response to the drag operation instruction, obtain movement information of the virtual index finger in real time; determine drag information of the target object based on the movement information of the virtual index finger; and control the target object to perform a movement operation corresponding to the drag information.

According to one or more embodiments of the present disclosure, the present disclosure provides an apparatus for interaction, wherein the movement operation module further includes a move stopping unit configured to after controlling the target object to perform the drag operation corresponding to the drag information, control the target object to stop moving when it is detected that the virtual thumb and the virtual middle finger are in the releasing state.

According to one or more embodiments of the present disclosure, the present disclosure provides an apparatus for interaction, wherein the apparatus further includes: a sliding operation module configured to, when it is detected that the virtual thumb tip slides on the virtual middle finger, trigger a sliding operation instruction; in response to the sliding operation instruction, obtain sliding information of the virtual thumb tip on the virtual middle finger; and control the current page to perform a sliding operation based on the sliding information, where the current page is the page where the target object is located.

According to one or more embodiments of the present disclosure, the present disclosure provides an apparatus for interaction, wherein obtaining the sliding information of the virtual thumb tip on the virtual middle finger includes: obtaining a start position and an end position of the virtual thumb tip on the virtual middle finger; and determining a difference between the end position and the start position as the sliding information.

According to one or more embodiments of the present disclosure, the present disclosure provides an electronic device, including:
one or more processors;
a memory configured to store one or more programs; and
the one or more programs, when executed by the one or more processors, causing the one or more processors to implement the method for interaction according to any one of the present disclosure.

According to one or more embodiments of the present disclosure, the present disclosure provides a computer-readable storage medium having stored thereon a computer program, and the computer program, when executed by a processor, implements the method for interaction according to any one of the present disclosure.

According to one or more embodiments of the present disclosure, the present disclosure provides a method for interaction, including: when it is determined that a palm of a virtual hand of a user in a virtual reality scene being facing upward, obtaining an action state of a virtual hand; and when it is determined that the action state of the virtual hand is changed from a pinching state to a releasing state, performing a predetermined operation, wherein the pinching state is a state where the five fingers of the virtual hand are together and fingertips are in contact, and the releasing state is a state where the five fingers of the virtual hand are stretched and separated.

According to one or more embodiments of the present disclosure, the present disclosure provides a method for interaction, wherein determining that the palm of the virtual hand of the user in the virtual reality scene is facing upward includes: constructing a normal line of the palm perpendicular to the palm plane by taking the palm center position of the virtual hand as a starting point; and determining that the palm of the virtual hand in the virtual device faces upward if the angle between the normal line of the palm and the Y axis of the world coordinate of the virtual reality scene is less than a predetermined threshold.

According to one or more embodiments of the present disclosure, the present disclosure provides a method for interaction, and determining that the action state of the virtual hand changes from the pinching state to the releasing state includes: obtaining a first distance between the distal segment of the virtual thumb and the distal segment of the virtual index finger of the virtual hand in real time, where the distal segment is a finger joint on the finger farthest from the palm; and when the first distance is transformed from a first range to a second range, determining that the action state of the virtual hand changes from the pinching state to the releasing state, where the first range is less than the second range.

According to one or more embodiments of the present disclosure, the present disclosure provides an interaction method, wherein obtaining a first distance between a distal segment of a virtual thumb of a virtual hand and a distal segment of a virtual index finger in real time comprises: binding a first three-dimensional ball at the distal segment of the virtual thumb; binding a second three-dimensional ball at the distal segment of the virtual index finger; and determining the distance between the first three-dimensional ball center and the second three-dimensional ball center as the first distance between the distal segment of the virtual large thumb and the distal segment of the virtual index finger of the virtual hand.

According to one or more embodiments of the present disclosure, the present disclosure provides a method for interaction, wherein determining that the action state of the virtual hand changes from the pinching state to the releasing state includes: obtaining a second distance between the fingertips of five fingers of the virtual hand in real time; and when the second distance is transformed from a third range to a fourth range, determining that the action state of the virtual hand is changed from the pinching state to the releasing state, where the third range is less than the fourth range.

According to one or more embodiments of the present disclosure, the present disclosure provides a method for interaction, wherein the predetermined operation includes: returning to a system homepage, invoking a function menu, or invoking a task management page.

According to one or more embodiments of the present disclosure, the present disclosure provides an apparatus for interaction, including: an action state obtaining module configured to, when it is determined that a palm of a virtual hand of a user in a virtual reality scene being facing upward, obtain an action state of a virtual hand; and an operation performing module configured to, when it is determined that the action state of the virtual hand is changed from a pinching state to a releasing state, perform a predetermined operation, wherein the pinching state is a state where the five fingers of the virtual hand are together and fingertips are in contact, and the releasing state is a state where the five fingers of the virtual hand are stretched and separated.

According to one or more embodiments of the present disclosure, the present disclosure provides an apparatus for interaction, where the apparatus further includes: a palm facing upward determination module, configured to determine that the palm of the virtual hand of the user in the virtual reality scene is facing upward, which specifically includes: a normal line of the palm constructing unit, configured to construct a normal line of the palm perpendicular to the palm plane by taking the palm center position of the virtual hand as a starting point; and a palm facing upward determination unit, configured to determine that the palm of the virtual hand in the virtual device faces upward if the angle between the normal line of the palm and the Y axis of the world coordinate of the virtual reality scene is less than a predetermined threshold.

According to one or more embodiments of the present disclosure, the present disclosure provides an apparatus for interaction, and the apparatus further includes: an action state determining module configured to determine that the action state of the virtual hand changes from the pinching state to the releasing state, which specifically includes: a first distance obtaining unit, configured to obtain a first distance between the distal segment of the virtual thumb and the distal segment of the virtual index finger of the virtual hand in real time, where the distal segment is a finger joint on the finger farthest from the palm; and an action state determining unit configured to, when the first distance is transformed from a first range to a second range, determining that the action state of the virtual hand changes from the pinching state to the releasing state, where the first range is less than the second range.

According to one or more embodiments of the present disclosure, the present disclosure provides an apparatus for interaction, wherein the first distance obtaining unit is specifically configured to bind a first three-dimensional ball at the distal segment of the virtual thumb; a second three-dimensional ball at the distal segment of the virtual index finger; and determine the distance between the first three-dimensional ball center and the second three-dimensional ball center as the first distance between the distal segment of the virtual large thumb and the distal segment of the virtual index finger of the virtual hand.

According to one or more embodiments of the present disclosure, the present disclosure provides an apparatus for interaction, where the apparatus includes: an action state determining module configured to determine that the action state of the virtual hand changes from the pinching state to the releasing state, which specifically includes: a second distance obtaining unit configured to obtain a second distance between the fingertips of five fingers of the virtual hand in real time; and an action state determining unit configured to, when the second distance is transformed from a third range to a fourth range, determine that the action state of the virtual hand is changed from the pinching state to the releasing state, where the third range is less than the fourth range.

According to one or more embodiments of the present disclosure, the present disclosure provides an apparatus for interaction, wherein the predetermined operation includes: returning to a system homepage, invoking a function menu, or invoking a task management page.

According to one or more embodiments of the present disclosure, the present disclosure provides an electronic device, including:
one or more processors;
a memory configured to store one or more programs; and
the one or more programs, when executed by the one or more processors, causing the one or more processors to implement the method for interaction according to any one of the present disclosure.

According to one or more embodiments of the present disclosure, the present disclosure provides a computer-readable storage medium having stored thereon a computer program, and the computer program, when executed by a processor, implements the method for interaction according to any one of the present disclosure.

An embodiment of the present disclosure further provides a computer program product, where the computer program product includes computer programs or instructions which, when executed by a processor, implements the method for interaction as described above.

According to one or more embodiments of the present disclosure, the present disclosure provides a method for interaction, including: detecting whether a palm is in a state where five fingers are closed together and straight; in response to the palm being in the state where five fingers are closed together and straight, determining whether the palm is within a predetermined range; and in response to the palm being within the predetermined range, triggering a human-computer interaction operation.

According to one or more embodiments of the present disclosure, the present disclosure provides a method for interaction, wherein in response to the palm being within the predetermined range, triggering a human-computer interaction operation includes: triggering the human-computer interaction operation if the palm is within the predetermined range and the duration of the palm is in the state where five fingers are closed together and straight exceeds a predetermined duration.

According to one or more embodiments of the present disclosure, the present disclosure provides a method for interaction, wherein detecting whether the palm is in the state where five fingers are closed together and straight includes: calculating a first distance between each fingertip of the palm; calculating a second distance between each fingertip of the palm and the palm center; and determining whether the palm is in the state where five fingers are closed together and straight based on the first distance and the second distance.

According to one or more embodiments of the present disclosure, the present disclosure provides a method for interaction, wherein the palm is in the state where five fingers are closed together and straight including: the first distance is less than a first distance threshold, and the second distance is greater than a second distance threshold, then it is determined that the palm is in the state where five fingers are closed together and straight.

According to one or more embodiments of the present disclosure, the present disclosure provides a method for interaction, wherein determining whether the palm is within the predetermined range includes: constructing a normal line of the palm perpendicular to the palm plane by taking the palm center position of the virtual hand as a starting point; drawing a circle with a predetermined circle center and a predetermined radius in a predetermined plane; and determining whether the palm is within the predetermined range based on a position relationship between the normal line of the palm and the circle.

According to one or more embodiments of the present disclosure, the present disclosure provides a method for interaction, wherein drawing the circle with the predetermined circle center and the predetermined radius in the predetermined plane includes: constructing a first plane at a position with a first predetermined length from a ground plane; constructing a second plane at a position with a second predetermined length from a plane where the face of the user is located; constructing a third plane perpendicular to the first plane and the second plane by taking a central axis of the user body as a reference line; determining an intersection point of the first plane, the second plane and the third plane as a circle center; and drawing the circle with a predetermined circle center and the predetermined radius in the second plane.

According to one or more embodiments of the present disclosure, the present disclosure provides an apparatus for interaction, including: a five-finger state detecting module configured to detect whether a palm is in a state where five fingers are closed together and straight; a palm range determining module configured to , in response to the palm being in a state where five fingers are closed together and straight, determine whether the palm is within a predetermined range; and an interaction triggering module configured to, in response to the palm being within the predetermined range, trigger a human-computer interaction operation.

According to one or more embodiments of the present disclosure, the present disclosure provides an apparatus for interaction, wherein the interaction triggering module is specifically configured to trigger the human-computer interaction operation if the palm is within the predetermined range and the duration of the palm is in the state where five fingers are closed together and straight exceeds a predetermined duration.

According to one or more embodiments of the present disclosure, the present disclosure provides an apparatus for interaction, wherein the five-finger state detecting module includes: a first distance measuring unit configured to calculate a first distance between each fingertip of the palm; a second distance measuring unit configured to calculate a second distance between each fingertip of the palm and the palm center; and a five-finger state detecting unit configured to determine whether the palm is in the state where five fingers are closed together and straight based on the first distance and the second distance.

According to one or more embodiments of the present disclosure, the present disclosure provides an apparatus for interaction, wherein the five-finger state detecting unit is specifically configured to, in response to the first distance being less than the first distance threshold and the second distance being greater than the second distance threshold, determine whether the palm is in the state where five fingers are closed together and straight.

According to one or more embodiments of the present disclosure, the present disclosure provides an apparatus for interaction, wherein the palm range determining module comprises: a normal line of the palm constructing unit configured to construct a normal line of the palm perpendicular to the palm plane by taking the palm center position of the virtual hand as a starting point; a circle drawing unit configured to draw a circle with a predetermined circle center and a predetermined radius in a predetermined plane; and a palm range determining unit configured to determine that the palm is within the predetermined range if the normal line of the palm intersects with the circle.

According to one or more embodiments of the present disclosure, the present disclosure provides an apparatus for interaction, wherein the circular drawing unit is specifically configured to construct a first plane at a position with a first predetermined length from a ground plane; construct a second plane at a position with a second predetermined length from a plane where the face of the user is located; construct a third plane perpendicular to the first plane and the second plane by taking a central axis of the user body as a reference line; determine an intersection point of the first plane, the second plane and the third plane as a circle center; and draw the circle with a predetermined circle center and the predetermined radius in the second plane.

According to one or more embodiments of the present disclosure, the present disclosure provides an electronic device, including:
one or more processors;
a memory configured to store one or more programs; and
the one or more programs, when executed by the one or more processors, causing the one or more processors to implement the method for interaction according to any one of the present disclosure.

According to one or more embodiments of the present disclosure, the present disclosure provides a computer-readable storage medium having stored thereon a computer program, and the computer program, when executed by a processor, implements the method for interaction according to any one of the present disclosure.

Embodiments of the present disclosure further provides a computer program product, where the computer program product includes computer programs or instructions which, when executed by a processor, implements the method for interaction as described above.

According to one or more embodiments of the present disclosure, the present disclosure provides a method for gesture control, including: obtaining a first hand image; identifying a hand posture of the first hand image; in response to the hand posture being a first posture, determining position information of a thumb according to the first hand image, wherein the first posture is a posture with four fingers clenched and the thumb straight; and determining that the position of the thumb meets a predetermined condition and performing a first operation.

According to one or more embodiments of the present disclosure, the present disclosure provides a method for gesture control, wherein identifying the hand posture of the first hand image includes: identifying a thumb tip, an index finger tip, a middle finger tip, a ring finger tip, a little finger tip, and a palm center in the first hand image; determining distances between the thumb tip, the index finger tip, the middle finger tip, the ring finger tip, the little finger tip and the palm center.

According to one or more embodiments of the present disclosure, the present disclosure provides a method for gesture control, wherein identifying the hand posture of the first hand image further includes: in response to the distances between the index finger tip, the middle finger tip, the ring finger tip, the little finger tip and the palm center are all less than a first distance threshold, and the distance between the thumb tip and the palm center is greater than the second distance threshold, determining that the hand posture is the first posture.

According to one or more embodiments of the present disclosure, the present disclosure provides a method for gesture control, wherein determining that the position of the thumb meets the predetermined condition includes: setting a collision zone at the head position of the user in advance; constructing a ray in the direction of the thumb tip in a straight state; and determining that the predetermined condition is met when the ray intersects the collision zone.

According to one or more embodiments of the present disclosure, the present disclosure provides a method for gesture control, wherein the first operation includes: turning on a microphone; and collecting an audio signal through a microphone.

According to one or more embodiments of the present disclosure, the present disclosure provides a method for gesture control, wherein in the process of performing the first operation, the method further includes: obtaining a second hand image in a predetermined period; determining a positional relationship between the thumb and the index finger according to the second hand image; and performing a second operation when it is determined that the positional relationship between the thumb and the index finger is that the thumb is in contact with the index finger.

According to one or more embodiments of the present disclosure, the present disclosure provides a method for gesture control, where the second operation includes: sending and / or saving the audio signal.

According to one or more embodiments of the present disclosure, the present disclosure provides an apparatus for gesture control, including: a first hand image obtaining module configured to obtain a first hand image; a hand posture identifying module configured to identify a hand posture of the first hand image; a position information determining module configured to , in response to the hand posture being a first posture, determine position information of a thumb according to the first hand image, wherein the first posture is a posture with four fingers clenched and the thumb straight; and a first operation performing module configured to determine that the position of the thumb meets a predetermined condition and perform a first operation.

According to one or more embodiments of the present disclosure, the present disclosure provides an apparatus for gesture control, wherein in a possible implementation, the hand posture identifying module includes: a fingertip and palm center identifying unit, configured to identify a thumb tip, an index finger tip, a middle finger tip, a ring finger tip, a little finger tip, and a palm center in the first hand image; and a distance determining unit configured to determine distances between the thumb tip, the index finger tip, the middle finger tip, the ring finger tip, the little finger tip and the palm center.

According to one or more embodiments of the present disclosure, the present disclosure provides an apparatus for gesture control, wherein the hand posture identifying module further includes: a first posture determining unit configured to, in response to the distances between the index finger tip, the middle finger tip, the ring finger tip, the little finger tip and the palm center are all less than a first distance threshold, and the distance between the thumb tip and the palm center is greater than the second distance threshold, determine that the hand posture is the first posture.

According to one or more embodiments of the present disclosure, the present disclosure provides an apparatus for gesture control, wherein determining that the position of the thumb meets the predetermined condition includes: setting a collision zone at the head position of the user in advance; constructing a ray in the direction of the thumb tip in a straight state; and determining that the predetermined condition is met when the ray intersects the collision zone.

According to one or more embodiments of the present disclosure, the present disclosure provides an apparatus for gesture control, wherein the first operation performing module includes: a microphone turning unit configured to turn on the microphone; and an audio collection unit configured to collect an audio signal through the microphone.

According to one or more embodiments of the present disclosure, the present disclosure provides an apparatus for gesture control, wherein the apparatus further includes: a second hand image obtaining module configured to obtain a second hand image in a predetermined period in a process of performing the first operation; a finger positional relationship obtaining module configured to determine a positional relationship between the thumb and the index finger according to the second hand image; and a second operation performing module configured to perform a second operation when it is determined that the positional relationship between the thumb and the index finger is that the thumb is in contact with the index finger.

According to one or more embodiments of the present disclosure, the present disclosure provides an apparatus for gesture control, wherein the second operation performing module is specifically configured to send and / or store the audio signal.

According to one or more embodiments of the present disclosure, the present disclosure provides an electronic device, including:
one or more processors;
a memory configured to store one or more programs;
the one or more programs, when executed by the one or more processors, causing the one or more processors to implement the method for gesture control according to any one of the present disclosure.

According to one or more embodiments of the present disclosure, the present disclosure provides a computer-readable storage medium having stored thereon a computer program, and the computer program, when executed by a processor, implements the method for gesture control according to any one of the present disclosure.

Embodiments of the present disclosure further provide a computer program product, where the computer program product includes computer programs or instructions which, when executed by a processor, implements the method for gesture control as described above.

What is described above is only for illustration of the preferred embodiments of the present disclosure and the technical principles used. It should be understood by those skilled in the art that the disclosed scope involved in the present disclosure is not limited to the technical solution formed by a specific combination of the technical features described above, and should also cover other technical solutions formed by any combination of the technical features described above or equivalent features without departing from the disclosed concept described above. For example, the technical solution formed by replacing the features described above with the technical features having similar functions disclosed in (but not limited to) the present disclosure.

Furthermore, although each operation is described in a specific order, this should not be understood as requiring the operations to be executed in the specific order shown or in a sequential order. In certain environments, multitasking and parallel processing may be advantageous. Similarly, although several specific implementation details are included in the above discussion, these details should not be interpreted as limiting the scope of the present disclosure. Some features described in the context of the separate embodiments can also be combined and implemented in a single embodiment. On the contrary, various features described in the context of a single embodiment can also be implemented in multiple embodiments separately or in any suitable subcombination manner.

Although the subject matter has been described in language specific to structural features and/or method logical actions, it should be understood that the subject matter defined in the appended claims may not necessarily be limited to the specific features or actions described above. On the contrary, the specific features and actions described above are only exemplary forms for implementing the claims.

## Claims

1. A method of determining a virtual cursor in a virtual reality scene, comprising:
determining position information of a virtual human body of a user in the virtual reality scene, wherein the position information comprises a wrist position and a waist position;
determining a virtual ray based on the position information, wherein a starting point of the virtual ray is determined based on the wrist position, and a direction of the virtual ray is determined based on the waist position and the wrist position;
determining the virtual cursor based on an intersection of the virtual ray and a virtual object in the virtual reality scene.

2. The method of claim 1, wherein determining the virtual ray based on the position information comprises:
obtaining positioning information and gesture recognition information of a virtual reality device, and determining the waist position and the wrist position based on the positioning information and the gesture recognition information;
determining the virtual ray with the wrist position as the starting point and based on an extending direction of the waist position and the wrist position.

3. The method of claim 2, wherein the direction of the virtual ray changes with a direction change of a line segment between the waist position and the wrist position.

4. The method of claim 2, wherein a degree of freedom of the waist position on the X-axis is consistent with the degree of freedom of head position of the user on the X-axis; and the degree of freedom of the waist position on the Z-axis is consistent with the degree of freedom of the head position of the user on the Z-axis.

5. The method of claim 1, further comprising:
displaying the virtual ray and the virtual cursor in the virtual reality scene.

6. The method of claim 1, further comprising:
determining a visible ray, wherein the visible ray takes a predetermined part of the virtual human body as a starting point and a direction of the visible ray is determined by the direction of the virtual ray, and displaying the visible ray and the virtual cursor in the virtual reality scene.

7. The method of claim 6, wherein the predetermined part of the virtual human body comprises at least one of: a fist, a thumb tip, an index finger tip, a middle finger tip, a ring finger tip, or a little finger tip.

8. An apparatus for determining a virtual cursor in a virtual reality scene, comprising:
a position information determining module configured to determine position information of a virtual human body of a user in the virtual reality scene, wherein the position information comprises a wrist position and a waist position;
a virtual ray determining module configured to determine a virtual ray based on the position information, wherein a starting point of the virtual ray is determined based on the wrist position, and a direction of the virtual ray is determined based on the waist position and the wrist position;
a virtual cursor determining module configured to determine the virtual cursor based on an intersection of the virtual ray and a virtual object in the virtual reality scene.

9. An electronic device, comprising:
one or more processors;
a storage device, configured to store one or more programs;
the one or more programs, when executed by the one or more processors, causing the one or more processors to implement the method of any of claims 1-7.

10. A computer-readable storage medium having stored thereon a computer program, wherein the computer program, when executed by a processor, implements the method of any of claims 1-7.

11. A computer program product, comprising computer programs or instructions, wherein the computer programs or instructions, when executed by a processor, implements the method of any of claims 1-7.
